# EUROPEAN PATENT APPLICATION

(11) **EP 3 826 138 A1**
(43) Date of publication of application: **26.05.2021**
(21) Application number: 18930617.8
(22) Date of filing: 21.08.2018
(51) Int. Cl.: H02J 50/12

(54) **NON-CONTACT POWER SUPPLY SYSTEM, POWER RECEPTION APPARATUS FOR NON-CONTACT POWER SUPPLY, AND ACTIVATION SIGNAL TRANSMISSION METHOD BY POWER RECEPTION APPARATUS FOR NON-CONTACT POWER SUPPLYING**

(71) Applicant: Mitsubishi Electric Corporation, Tokyo 100-8310 (JP)
(72) Inventor: OTSUBO, Fumie, Tokyo 100-8310 (JP); SHIMURA, Ryo, Tokyo 100-8310 (JP); MAMADA, Daichi, Tokyo 100-8310 (JP); AKUZAWA, Yoshiyuki, Tokyo 102-0073 (JP)
(74) Representative: Pfenning, Meinig & Partner mbB
(86) International application number: PCT/JP2018/030813
(87) International publication number: WO 2020/039500

(57) **Abstract**

Included are: a power reception apparatus (2), including: a reception antenna (211) capable of receiving power from any of multiple transmission antennas (11) in a non-contact manner; a power supply unit (25); and an activation signal transmitting unit (211) for transmitting an activation signal to a power transmission device (1, 1a) when supplied with power from the power supply unit (25) and an operation instruction is received; and the power transmission device (1, 1a) including: an activation signal receiving unit (1051) for receiving the activation signal; a power transmission unit (1042) for starting power supply to the multiple transmission antennas (11) when the activation signal is received; and an antenna determination unit (1043) for determining a power transmission target antenna, in which non-contact power supply to the reception antenna (211) of the power reception apparatus (2) is performed with the power transmission unit (1042) supplying power to the power transmission target antenna.

## Description

### TECHNICAL FIELD

The present invention relates to a non-contact power supply system.

### BACKGROUND ART

In the related art, in a case where a power transmission device for performing non-contact power supply includes multiple transmission antennas, there is known technology capable of detecting a transmission antenna, to which a power reception apparatus is disposed to face, from among the multiple transmission antennas.

For example, Patent Literature 1 discloses a non-contact power supply system in which a rated current is supplied to primary coils of multiple non-contact power supply units arranged on a wall of a building or the like during normal power supply operation at regular time intervals to generate a high-frequency magnetic field, and it is detected whether or not a non-contact power reception unit is disposed to face the non-contact power supply unit depending on a change pattern in which the impedance when the power receiving side is viewed from the non-contact power supply unit changes. Note that the multiple non-contact power supply units disclosed in Patent Literature 1 each include a primary coil. This primary coil functions as a transmission antenna.

### CITATION LIST

### PATENT LITERATURE

Patent Literature 1: JP 2009-159685 A

### SUMMARY OF INVENTION

### TECHNICAL PROBLEM

In conventional technology as disclosed in Patent Literature 1, power supply from each transmission antenna is sequentially turned on and off at regular time intervals during normal power supply operation. Therefore, even in an area where no power reception apparatus including a non-contact power reception unit is disposed to face a transmission antenna, power is supplied at regular time intervals. As a result, the related art has a disadvantage that unnecessary electromagnetic waves are radiated at regular time intervals in an area where no power reception apparatus is disposed to face a transmission antenna. The electromagnetic waves may affect a power reception apparatus installed in the vicinity of the electromagnetic waves as interference waves.

The present invention has been made to solve the above-described problem, and an object of the invention is to provide a non-contact power supply system capable of reducing unnecessary radiation of electromagnetic waves from a transmission antenna.

### SOLUTION TO PROBLEM

A non-contact power supply system according to the present invention includes: a power reception apparatus, including: a reception antenna capable of receiving power from any of multiple transmission antennas included in a power transmission device in a non-contact manner; a power supply unit; and an activation signal transmitting unit for transmitting an activation signal for activating the multiple transmission antennas to the power transmission device when supplied with power from the power supply unit and receiving an operation instruction; and the power transmission device including: an activation signal receiving unit for receiving the activation signal transmitted from the activation signal transmitting unit; a power transmission unit for starting power supply to the multiple transmission antennas when the activation signal receiving unit receives the activation signal; and an antenna determination unit for determining a power transmission target antenna to which the power supply from the power transmission unit is to be continued among the multiple transmission antennas, in which non-contact power supply to the reception antenna of the power reception apparatus is performed with the power transmission unit supplying power to the power transmission target antenna determined by the antenna determination unit.

### ADVANTAGEOUS EFFECTS OF INVENTION

According to the present invention, unnecessary radiation of electromagnetic waves from a transmission antenna can be reduced.

### BRIEF DESCRIPTION OF DRAWINGS

FIG. 1 is a diagram for explaining an exemplary image of a configuration of a non-contact power supply system according to a first embodiment.
FIG. 2A is a diagram illustrating a configuration example of the entire non-contact power supply system according to the first embodiment.
FIG. 2B is a diagram illustrating a specific configuration example of a power transmission control device included in a power transmission device in the first embodiment.
FIG. 2C is a diagram illustrating a specific configuration example of a power reception apparatus in the first embodiment.
FIG. 3 is a table illustrating an example of a relationship between parameters for which a foreign matter detecting unit detects a change and foreign matters detected by a change in the parameters in the first embodiment.
FIG. 4 is a flowchart for explaining the operation of the power reception apparatus according to the first embodiment.
FIG. 5 is a diagram illustrating an exemplary image of a state in which a reception antenna is installed across transmission antennas in the first embodiment.
FIG. 6 is a flowchart for explaining the operation of the power transmission control device according to the first embodiment.
FIGS. 7A and 7B are diagrams each illustrating an exemplary hardware configuration of the power reception apparatus according to the first embodiment.
FIGS. 8A and 8B are diagrams each illustrating an exemplary hardware configuration of the power transmission control device according to the first embodiment.
FIG. 9 is a diagram for explaining a configuration example of a power transmission device and a power reception apparatus in a non-contact power supply system according to a second embodiment.

### DESCRIPTION OF EMBODIMENTS

To describe the present invention further in detail, embodiments for carrying out the present invention will be described below with reference to the accompanying drawings.

### First Embodiment

In the following first embodiment, as an example, it is assumed that a non-contact power supply scheme of a resonance type is employed in a non-contact power supply system. Since the technology of the resonance-type non-contact power supply scheme is existing technology, detailed description will be omitted.

In a resonance-type non-contact power supply scheme, power can be supplied from a power transmission device to a power reception apparatus even in a state in which the power reception apparatus that operates being supplied with power from the power transmission device is not installed to accurately face the power transmission device. The state in which the power reception apparatus is not installed to face the power transmission device refers to a state in which the surfaces and the centers of each of the power reception apparatus and the power transmission device do not face each other so as to overlap.

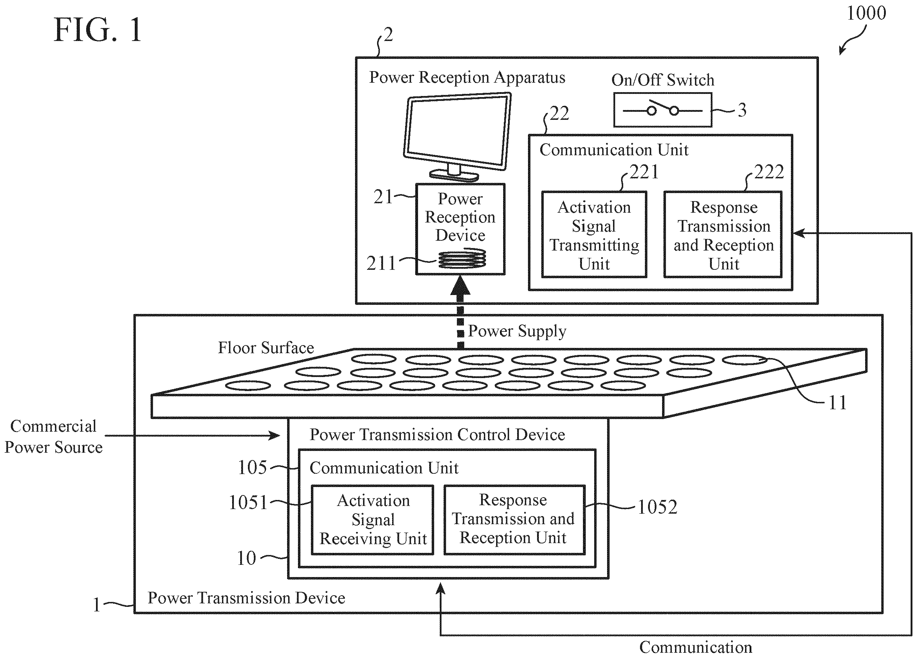

FIG. 1 is a diagram for explaining an exemplary image of a configuration of a non-contact power supply system 1000 according to a first embodiment.

It is assumed in the first embodiment described below that the non-contact power supply system 1000 is used in a building such as a house.

A power transmission device 1 and a power reception apparatus 2 are included in the non-contact power supply system 1000.

In the non-contact power supply system 1000, the power transmission device 1 installed in a structure included in a building such as a floor or a wall of the building supplies power to the power reception apparatus 2 in a non-contact manner. In the first embodiment, as an example, the structure in which the power transmission device 1 is installed is a floor as illustrated in FIG. 1.

In the first embodiment, the power reception apparatus 2 is a household electric appliance. In FIG. 1, a television is illustrated as exemplary household electric appliance. Note that in this specification the term "household electric appliance" is not limited to electric appliances exclusively used in a general household, but also includes various electric appliances.

A user can install the power reception apparatus 2 as appropriate in an area where the power transmission device 1 can supply power. In addition, the user can remove the power reception apparatus 2 installed in the area where the power transmission device 1 can supply power to the outside of the area, or can move the power reception apparatus 2 within the area.

The power transmission device 1 includes a power transmission control device 10 and multiple transmission antennas 11, receives power supplied from a commercial power source, and supplies power to the power reception apparatus 2 installed in an area where power can be supplied. Specifically, the power transmission control device 10 receives power and supplies high-frequency AC power (hereinafter, referred to as "high-frequency power") to any one of the multiple transmission antennas 11. Having received supply of the high-frequency power from the power transmission control device 10, the transmission antenna 11 resonates at the same frequency as that of the high-frequency power and generates a magnetic field in a space (hereinafter, the state in which a transmission antenna 11 receives the supply of the high-frequency power and generates a magnetic field is in the space is referred to as an "activated state".) When the power reception apparatus 2 is installed in an area where power can be supplied from the transmission antenna 11, power is supplied to a power reception device 21 included in the power reception apparatus 2 in a non-contact manner. As a result, non-contact power supply is performed from the power transmission device 1 to the power reception apparatus 2. Note that, in the following description, the multiple transmission antennas 11 are also simply referred to as transmission antennas 11.

The power transmission control device 10 is installed inside the floor. A detailed configuration example of the power transmission control device 10 will be described later.

The multiple transmission antennas 11 are each installed on the floor surface, inside the floor material, or under the floor. In FIG. 1, the transmission antennas 11 are laid on the floor at narrow intervals from each other; however, it is not essential that the transmission antennas 11 be laid on the floor in this manner. The transmission antennas 11 may be installed in the floor in a scattered manner. Also, in FIG. 1, the image of the state in which the transmission antennas 11 are installed is illustrated by circles; however, this is merely an image of the state of installation and does not illustrate the shape of the transmission antennas 11.

The power transmission control device 10 and the transmission antennas 11 are connected by, for example, cables.

The power reception apparatus 2 receives power from the power transmission device 1 in a non-contact manner. Specifically, the power reception apparatus 2 is mounted with the power reception device 21 including a reception antenna 211, and the power reception device 21 receives power from the power transmission control device 10 in a non-contact manner via the reception antenna 211 and a transmission antenna 11.

The reception antenna 211 resonates at the same frequency as the resonance frequency of the transmission antenna 11 by the magnetic field generated by a transmission antenna 11 in the activated state, thereby receiving power from the transmission antenna 11 in a non-contact manner.

The power received by the power reception device 21 enables the power reception apparatus 2 to operate.

A detailed configuration example of the power reception apparatus 2 will be described later.

The power transmission control device 10 and the power reception apparatus 2 can communicate with each other using wireless communication. As communication standards, for example, Bluetooth (registered trademark, hereinafter omitted), Zigbee (registered trademark, hereinafter omitted), or the like is used.

The power reception apparatus 2 transmits an activation signal to the power transmission control device 10 each time a switch 3 included in the power reception apparatus 2 is turned on.

Upon receiving the activation signal transmitted from the power reception apparatus 2, the power transmission control device 10 starts supplying high-frequency power to the transmission antennas 11, thereby bringing the transmission antennas 11 into an activated state. In a case where the power reception apparatus 2 is installed in an area where power can be supplied from the transmission antennas 11 in the activated state, non-contact power supply to the power reception apparatus 2 is started by one of the transmission antennas 11. The power reception apparatus 2, to which the non-contact power supply has started, transmits a response signal for the start of the non-contact power supply to the power transmission control device 10.

The power transmission control device 10 determines a transmission antenna for which high-frequency power supply needs to be continued (hereinafter referred to as a "power transmission target antenna") among the transmission antennas 11 in the activated state in response to the response signal received from the power reception apparatus 2. The power transmission control device 10 keeps supplying the high-frequency power to the power transmission target antenna, thereby allowing the power transmission target antenna to stay in the activated state. The power transmission control device 10 stops supplying the high-frequency power to transmission antennas 11 other than the power transmission target antenna. The transmission antennas 11, the supply of high-frequency power to which have been stopped, do not enter the activated state unless an activation signal is output with the switch 3 turned on again.

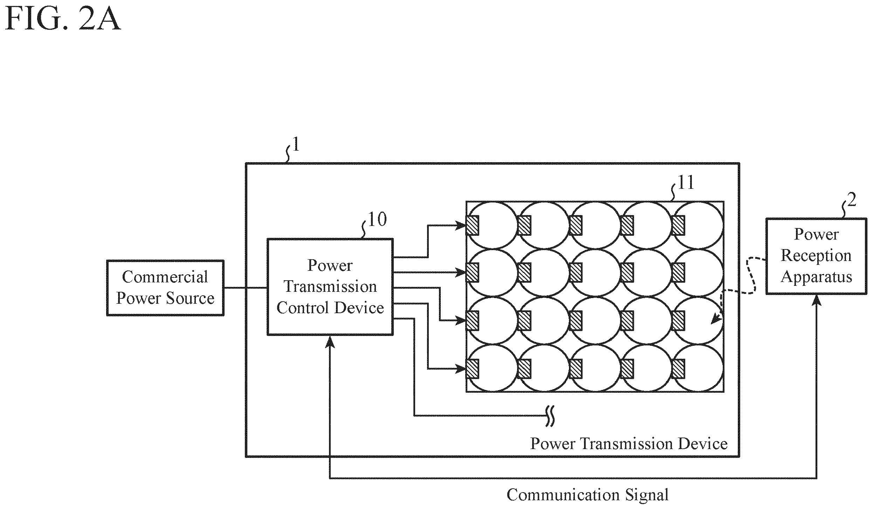

FIG. 2A is a diagram illustrating a configuration example of the entire non-contact power supply system 1000 according to the first embodiment.

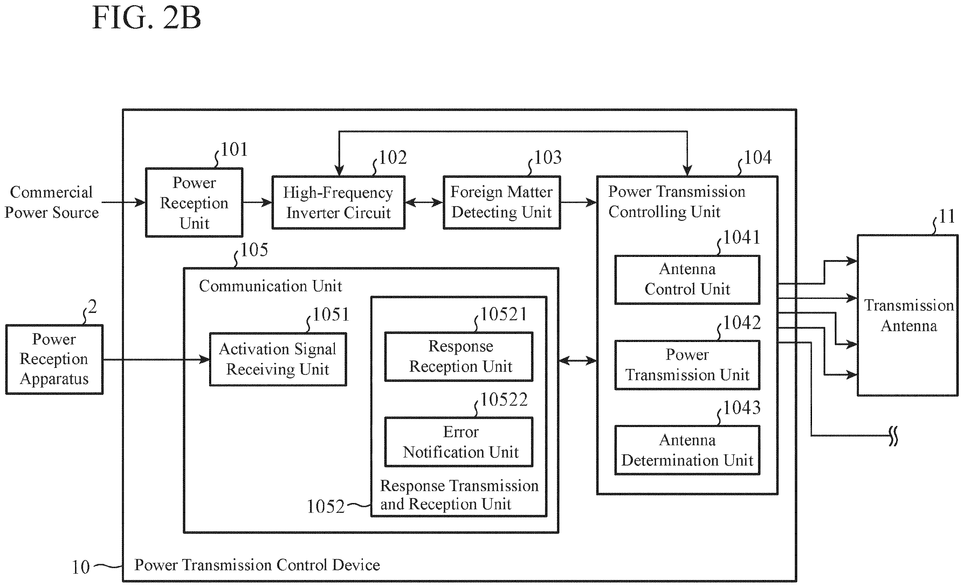

FIG. 2B is a diagram illustrating a specific configuration example of the power transmission control device 10 included in the power transmission device 1 of the first embodiment.

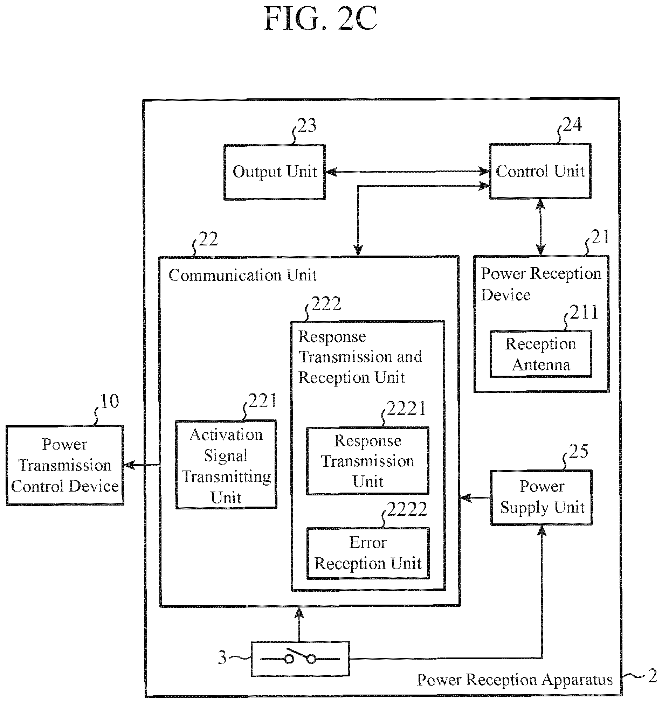

FIG. 2C is a diagram illustrating a specific configuration example of the power reception apparatus 2 of the first embodiment.

As illustrated in FIG. 2A, the power transmission device 1 includes the power transmission control device 10 and the transmission antennas 11.

In the power transmission device 1 according to the first embodiment, each time an activation signal is transmitted from the power reception apparatus 2, the power transmission control device 10 performs the "activation process" of activating the transmission antennas 11 and, after the "activation process", performs a "steady power transmission process" including processes of determining a power transmission target antenna, causing the power transmission target antenna to stay in the activated state and to perform steady non-contact power supply to the power reception apparatus.

As illustrated in FIG. 2B, the power transmission control device 10 includes a power reception unit 101, a high-frequency inverter circuit 102, a foreign matter detecting unit 103, a power transmission controlling unit 104, and a communication unit 105.

The power transmission controlling unit 104 includes an antenna control unit 1041, a power transmission unit 1042, and an antenna determination unit 1043.

The communication unit 105 includes an activation signal receiving unit 1051 and a response transmission and reception unit 1052, and the response transmission and reception unit 1052 includes a response reception unit 10521 and an error notification unit 10522.

The power reception unit 101 also receives power supplied from the commercial power source. Note that, in the first embodiment, the commercial power source is assumed to be, for example, a commercial AC power source of 50 Hz or 60 Hz.

The power reception unit 101 outputs the power supplied from the commercial power source to the high-frequency inverter circuit 102. At this point, the power reception unit 101 converts commercial power, which is AC power, into DC power.

The high-frequency inverter circuit 102 converts the DC power output from the power reception unit 101 into high-frequency power. The high-frequency inverter circuit 102 outputs the high-frequency power to the foreign matter detecting unit 103 and the power transmission controlling unit 104.

The power transmission controlling unit 104 controls to supply the high-frequency power output from the high-frequency inverter circuit 102 to the transmission antennas 11.

The antenna control unit 1041 of the power transmission controlling unit 104 controls the supply of high-frequency power to the transmission antennas 11 by the power transmission unit 1042.

Specifically, the antenna control unit 1041 activates the transmission antennas 11 by causing the power transmission unit 1042 to supply high-frequency power to the transmission antennas 11 when an activation signal is output from the activation signal receiving unit 1051 of the communication unit 105 in the "activation process". At this point, the antenna control unit 1041 activates all the transmission antennas 11 other than the transmission antenna 11 that has been set as the power transmission target antenna in a previous "steady power transmission process" and been in the activated state. Note that although the antenna control unit 1041 activates all the other transmission antennas 11 except for the transmission antenna 11 that has been set as the power transmission target antenna in the previous "steady power transmission process" and been in the activated state in the first embodiment as described above, this is merely an example. The antenna control unit 1041 may activate all the transmission antennas 11 by causing the power transmission unit 1042 to supply high-frequency power to all the transmission antennas 11 when an activation signal is output from the activation signal receiving unit 1051.

The antenna control unit 1041 also determines whether or not the power transmission device 1 is normally activated when the transmission antennas 11 are activated by causing the high-frequency power to be supplied to the transmission antennas 11 in the "activation process". Details will be described later.

The antenna control unit 1041 further controls the power transmission unit 1042 to continue the supply of high-frequency power to the power transmission target antenna and to stop the supply of high-frequency power to transmission antennas 11 other than the power transmission target antenna when the antenna determination unit 1043 determines a power transmission target antenna in the "steady power transmission process". Details will be described later.

The antenna control unit 1041 also transmits an error signal to the communication unit 105 and causes the power transmission unit 1042 to stop supplying high-frequency power to the power transmission target antenna when the foreign matter detecting unit 103 detects a foreign matter for the activated power transmission target antenna in the "steady power transmission process". Details will be described later.

Furthermore, the antenna control unit 1041 determines whether or not the activated power transmission target antenna is performing non-contact power supply to the power reception device 21 in the "steady power transmission process", and outputs an error signal to the communication unit 105 and causes the power transmission unit 1042 to stop the supply of high-frequency power to the power transmission target antenna when it is determined that no non-contact power supply is being performed to the power reception device 21. Details will be described later.

The power transmission unit 1042 of the power transmission controlling unit 104 starts supplying high-frequency power to the transmission antennas 11 under the control of the antenna control unit 1041 when the activation signal receiving unit 1051 outputs an activation signal in the "activation process".

Moreover, in the "steady power transmission process", the power transmission unit 1042 continues to supply high-frequency power to the power transmission target antenna under the control of the antenna control unit 1041 and stops supplying high-frequency power to transmission antennas 11 other than the power transmission target antenna.

The antenna determination unit 1043 of the power transmission controlling unit 104 determines a power transmission target antenna from the multiple transmission antennas in the activated state depending on the response signal in the "steady power transmission process" when the response reception unit 10521 of the communication unit 105 receives a response signal from the power reception apparatus 2 during the "activation process".

The antenna determination unit 1043 outputs information of the determined power transmission target antenna to the antenna control unit 1041.

The foreign matter detecting unit 103 detects a foreign matter present between the power transmission device 1 and the power reception device 21 on the basis of the supply state of high-frequency power to the power transmission target antenna while the power transmission unit 1042 is supplying high-frequency power to the power transmission target antenna in the "steady power transmission process". Specifically, the foreign matter detecting unit 103 detects a foreign matter present between the power transmission target antenna and the reception antenna 211.

In the first embodiment, "between the transmission antenna 11 and the reception antenna 211" refers to a space in which non-contact power supply to the power reception apparatus 2 is performed mainly by transmission of a magnetic field in the electromagnetic waves generated in a space by the transmission antennas 11 in the activated state.

The foreign matter detecting unit 103 detects a change in a parameter, and detects a foreign matter on the basis of the detected change in the parameter. Parameters for which the foreign matter detecting unit 103 detects a change include an input voltage or an input current of the high-frequency inverter circuit 102 and the like.

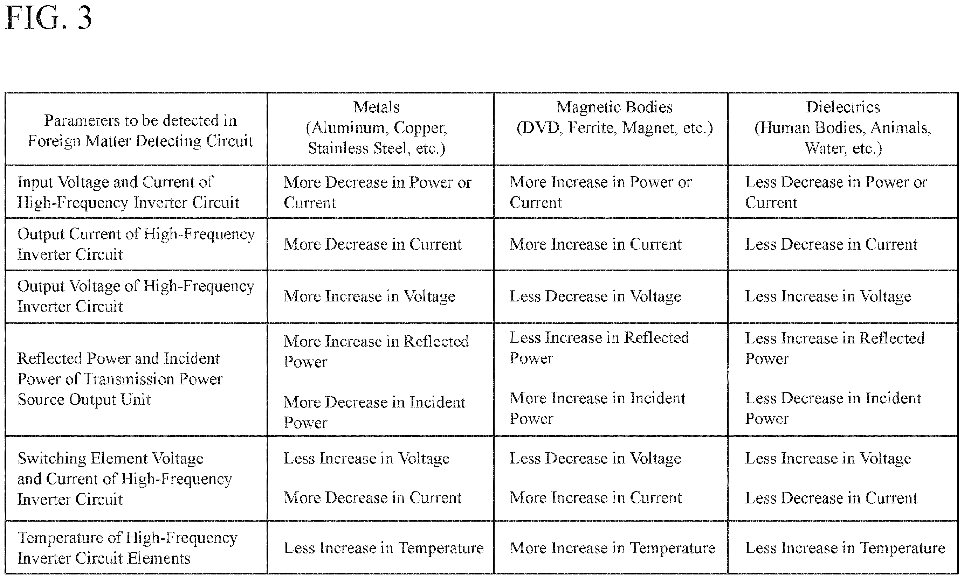

FIG. 3 is a table illustrating an example of a relationship between parameters for which the foreign matter detecting unit 103 detects a change and foreign matters detected by a change in the parameters in the first embodiment.

As illustrated in FIG. 3, the foreign matter detecting unit 103 detects a foreign matter as follows using, for example, an input voltage or an input current of the high-frequency inverter circuit 102 as a parameter.
- In a case where a decrease in the power or the current is greater than a preset threshold value (first threshold value), a metal such as aluminum, copper, or stainless steel is detected as a foreign matter. Note that the foreign matter detecting unit 103 calculates the power from the input voltage and the input current.
- In a case where an increase in the power or the current is greater than a preset threshold value (second threshold value), a magnetic body such as a digital versatile disc (DVD), ferrite, or a magnet is detected as a foreign matter.
- In a case where a decrease in the power or the current is smaller than a preset threshold value (third threshold value), a dielectric such as a human body, an animal, or water is detected as a foreign matter.

As described above, the foreign matter detecting unit 103 detects a foreign matter depending on a change in the parameters. The foreign matter detecting unit 103 can specify the type of a foreign matter depending on a change in a parameter. The foreign matter detecting unit 103 can further detect foreign matters of multiple different types by combining the parameters as illustrated in FIG. 3. The more parameters are detected, the higher the detection accuracy of foreign matters becomes.

When a foreign matter is detected, the foreign matter detecting unit 103 outputs information indicating that the foreign matter has been detected to the power transmission controlling unit 104.

The communication unit 105 transmits and receives information to and from the power reception apparatus 2 by wireless communication. As communication standards, for example, Bluetooth, Zigbee, or the like is used.

The activation signal receiving unit 1051 of the communication unit 105 receives an activation signal transmitted from the power reception apparatus 2 in the "activation process". The activation signal receiving unit 1051 outputs the received activation signal to the power transmission controlling unit 104.

The response reception unit 10521 of the response transmission and reception unit 1052 of the communication unit 105 receives a response signal transmitted from the power reception apparatus 2 in the "activation process".

In a case where the power reception apparatus 2 is installed in an area where power can be supplied from the activated transmission antennas 11, the reception antenna 211 of the power reception device 21 receives power, thereby non-contact power supply to the power reception apparatus 2 is started by one of the transmission antennas 11. The power reception apparatus 2, to which the non-contact power supply has been started, transmits a response signal for the start of the non-contact power supply to the power transmission control device 10 by a communication unit 22. The response reception unit 10521 receives a response signal transmitted by the power reception apparatus 2 to which the non-contact power supply has been started.

Note that, in a case where there are multiple power reception apparatuses 2 to be supplied with power, a response signal is transmitted from each of the power reception apparatuses 2, and the response reception unit 10521 receives each of the response signals. A response signal received by the response reception unit 10521 is, for example, a flag, and it cannot be determined, on the basis of the response signal, from which power reception apparatus 2 the response signal has been transmitted.

The response reception unit 10521 outputs the received response signal to the power transmission controlling unit 104.

When an error signal is output from the power transmission controlling unit 104, the error notification unit 10522 of the response transmission and reception unit 1052 of the communication unit 105 transmits the error signal to the power reception apparatus 2 in the "steady power transmission process".

As illustrated in FIG. 2C, the power reception apparatus 2 includes the power reception device 21, the communication unit 22, an output unit 23, a control unit 24, a power supply unit 25, and the switch 3. The power reception device 21 includes the reception antenna 211.

The communication unit 22 includes an activation signal transmitting unit 221 and a response transmission and reception unit 222, and the response transmission and reception unit 222 includes a response transmission unit 2221 and an error reception unit 2222.

The power reception device 21 receives power from a transmission antenna 11 via the reception antenna 211. Note that the power reception device 21 includes a rectifier circuit (not illustrated) and a DC/DC converter (not illustrated), and converts AC power received by the reception antenna 211 into DC power in the power reception device 21.

The power reception device 21 outputs the power received by the reception antenna 211 to the control unit 24. The control unit 24 operates with the power output from the power reception device 21 and controls each of the components of the power reception apparatus 2.

When the switch 3 is turned on, the activation signal transmitting unit 221 of the communication unit 22 transmits an activation signal to the power transmission control device 10. The activation signal transmitted from the activation signal transmitting unit 221 is for activating the multiple transmission antennas 11 in conjunction with the operation of the switch 3, and the activation signal causes the "activation process" to start in the power transmission control device 10.

The activation signal transmitting unit 221 receives power from the power supply unit 25, and transmits an activation signal using the power. The power supply unit 25 includes, for example, a button battery or a small rechargeable battery. The power supply unit 25 may be, for example, a small-capacity battery or a capacitor. Alternatively, the power supply unit 25 may be charged by non-contact power supply from the power transmission control device 10. The power supply unit 25 is only required to be capable of supplying power to at least the communication unit 22, and does not need to supply power to the other components included in the power reception apparatus 2.

The activation signal transmitting unit 221 has only a function of transmitting an activation signal, and is only required to be able to receive power of a capacity sufficient to transmit the activation signal in order to operate.

The communication unit 22 transmits and receives information to and from the power transmission control device 10 by wireless communication. As communication standards, for example, Bluetooth, Zigbee, or the like is used.

The response transmission unit 2221 of the response transmission and reception unit 222 of the communication unit 22 transmits a response signal to the communication unit 105 of the power transmission control device 10 when non-contact power supply is started from the power transmission control device 10 to the power reception device 21 via the reception antenna 211 and a transmission antenna 11. Specifically, the control unit 24 controls the response transmission unit 2221 to transmit a response signal when the control unit 24 causes the power reception apparatus 2 to operate with the power received by the power reception device 21. Note that the operation by the response transmission unit 2221 of transmitting a response signal to the communication unit 105 of the power transmission control device 10 is performed at the time of the "activation process" of receiving an activation signal transmitted from the power reception apparatus 2 in the power transmission control device 10.

The error reception unit 2222 of the response transmission and reception unit 222 of the communication unit 22 receives an error signal transmitted from the power transmission control device 10. Note that the operation by the error reception unit 2222 of receiving the error signal transmitted from the power transmission control device 10 is performed at the time of "steady power transmission process" in the power transmission control device 10.

The error reception unit 2222 outputs the received error signal to the control unit 24. The control unit 24 causes the output unit 23 to temporarily output error information when the error signal is output from the error reception unit 2222.

The output unit 23 is a display, a level meter, or the like, and outputs various types of information.

For example, the output unit 23 outputs information indicating a power supply state from the power transmission device 1 in the power reception apparatus 2. Specifically, the power reception apparatus 2 includes a measurement unit (not illustrated) for measuring the power (hereinafter, referred to as a "power measurement value") that the power reception device 21 receives from the power transmission control device 10 via the reception antenna 211 and a transmission antenna 11. The control unit 24 controls the output unit 23 on the basis of the power measurement value, and causes the output unit 23 to output information indicating the power supply state. Note that, for example, a wattmeter is used as the measurement unit.

The control unit 24 causes the output unit 23 to output information indicating the power supply state by various methods on the basis of the power measurement value.

For example, in a case where the output unit 23 is a display, the output unit 23 displays the power measurement value in characters. Alternatively, for example in a case where the output unit 23 is a level meter, the output unit 23 displays, by light, the power supply state based on the power measurement value. Further alternatively, for example, the output unit 23 may be a speech output device, and may output the power supply state based on the power measurement value by sound.

A user can grasp the relative position between the power reception apparatus 2 and the power transmission device 1 by confirming the information indicating the power supply state output by the output unit 23. The relative position between the power reception apparatus 2 and the power transmission device 1 specifically refers to the relative position between the reception antenna 211 and the transmission antenna 11.

The output unit 23 outputs error information under the control of the control unit 24.

For example, in a case where the output unit 23 is a display, the output unit 23 displays an error message.

The control unit 24 controls each of the components of the power reception apparatus 2.

The power supply unit 25 supplies power to the communication unit 22.

The operation of the power reception apparatus 2 according to the first embodiment will be described.

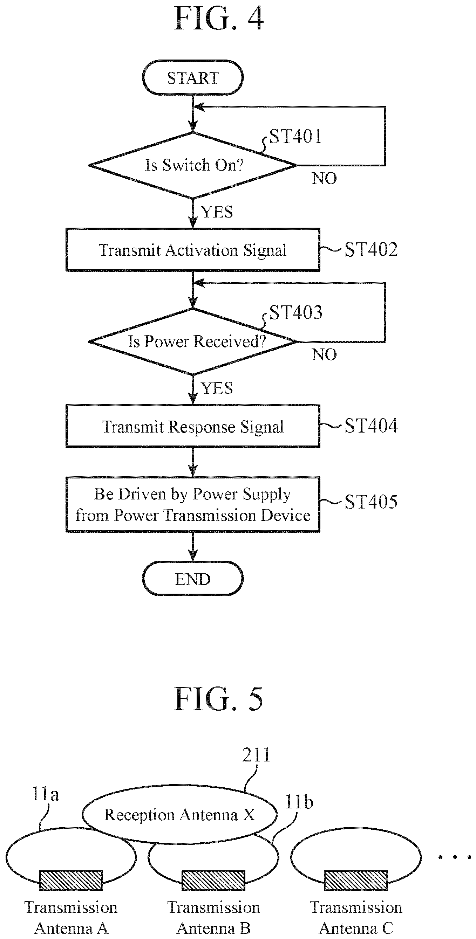

FIG. 4 is a flowchart for explaining the operation of the power reception apparatus 2 according to the first embodiment.

The activation signal transmitting unit 221 stands by until the switch 3 is turned on from the OFF state (in the case of "NO" in step ST401). When the switch 3 is turned ON (in the case of "YES" in step ST401), the activation signal transmitting unit 221 transmits an activation signal to the power transmission control device 10 (step ST402). Specifically, when the switch 3 is turned on ("YES" in step ST401), the activation signal transmitting unit 221 detects that the switch 3 has been turned on, receives power from the power supply unit 25, and transmits an activation signal using the power.

In step ST403, the control unit 24 stands by until the power reception device 21 receives power from the power transmission control device 10 (in the case of "NO" in step ST403). When the power reception device 21 receives power from the power transmission control device 10 (in the case of "YES" in step ST403), the control unit 24 causes the power reception apparatus 2 to operate on the basis of the power received by the power reception device 21. Then, under the control of the control unit 24, the response transmission unit 2221 transmits a response signal to the communication unit 105 of the power transmission control device 10 (step ST404).

Then, the power reception apparatus 2 is driven by non-contact power supply from the power transmission device 1 (step ST405).

The control unit 24 causes the output unit 23 to output information indicating the power supply state in accordance with the power supply state from the power transmission device 1 while it is being driven by the non-contact power supply from the power transmission device 1.

Hereinafter, the operation in which the output unit 23 outputs information indicating the power supply state under the control of the control unit 24 will be described with a specific example.

Here, for example, assuming that the output unit 23 is an LED level meter including three LEDs (a first LED, a second LED, and a third LED), the control unit 24 controls lighting of the three LEDs on the basis of the power supply states corresponding to power measurement values.

For example, assuming that 1000 watts is ensured as the power transmitted from the power transmission device 1, the control unit 24 turns on different LEDs for each of cases where the power measurement value reaches 1000 watts (defined as a first state), where the power measurement value is equal to or more than 500 watts and less than 1000 watts (defined as a second state), where the power measurement value is equal to or more than 200 watts and less than 500 watts (defined as a third state), and where the power measurement value is less than 200 watts (defined as a fourth state).

Specifically, the control unit 24 turns on all the first to third LEDs in the first state, turns on only the first and second LEDs in the second state, turns on only the first LED in the third state, and does not turn on any of the LEDs in the fourth state.

For example, in a case where the reception antenna 211 is installed across multiple transmission antennas 11, the power reception apparatus 2 is not supplied with the power that is ensured as the power supplied from the power transmission device 1, and thus, for example, one or two out of the first to third LEDs are lit up.

In the first embodiment, "for one reception antenna 211 to be installed across multiple transmission antennas 11" refers to a positional relationship between the one reception antenna 211 and the multiple transmission antennas 11 in which non-contact power supply can be performed from any of the multiple transmission antennas 11 to the one reception antenna 211.

FIG. 5 is a diagram illustrating an exemplary image of a state in which the reception antenna 211 is installed across transmission antennas 11 in the first embodiment.

FIG. 5 is a diagram illustrating an exemplary image in which a reception antenna X (211) is installed across a transmission antenna A (11a) and a transmission antenna B (11b).

As illustrated in FIG. 5, when the reception antenna 211 is installed across the transmission antennas 11, the reception antenna 211 cannot receive the power guaranteed as the power supplied from the power transmission device 1.

A user can instantly grasp the power supply status as to whether the power is supplied or the power is being supplied but is not sufficient by looking at the lighting state of the output unit 23.

In addition, the user can grasp the relative position between the power transmission device 1 and the power reception apparatus 2 from the lighting state of the output unit 23.

For example, if the user checks the lighting state of the output unit 23 and determines that the power reception apparatus 2 is supplied with power but not sufficiently, the user moves the power reception apparatus 2, and moves the power reception apparatus 2 to a position where power is sufficiently supplied to.

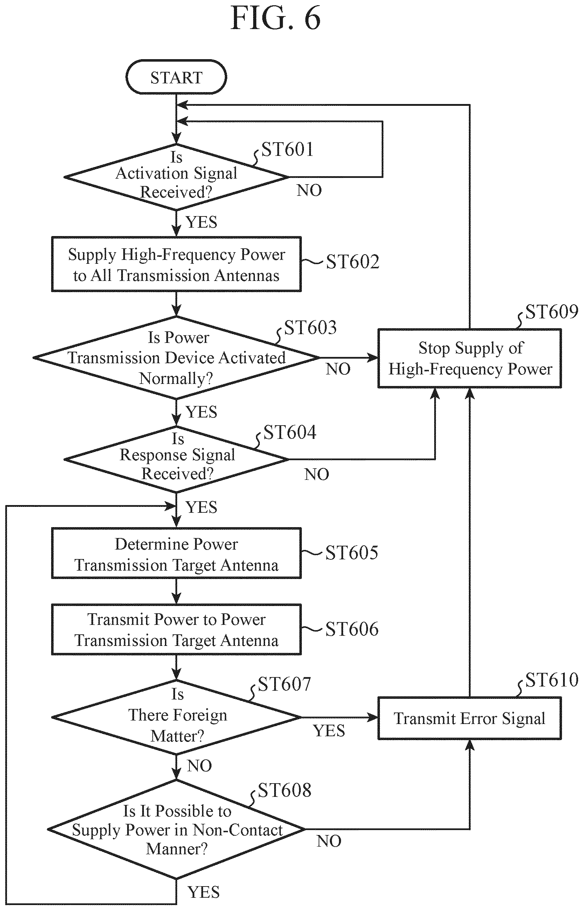

In addition, when an error signal is transmitted from the power transmission device 1 while it is beng driven by power supply from the power transmission device 1 (see step ST610 in FIG. 6 described later), the error reception unit 2222 receives the error signal.

When the error signal is output from the error reception unit 2222, the control unit 24 causes the output unit 23 to output error information. Specifically, the control unit 24 causes, for example, error information indicating that a foreign matter has been detected or error information indicating that power supply has been stopped to be output. Note that the control unit 24 causes the error information to be temporarily output. It is assumed that the time when the error information is output is set in advance.

By confirming the error information, the user can grasp that a foreign matter has been detected or that power supply has been stopped.

The user confirms the error information and removes the foreign matter. Then, when the user performs the operation of turning off the switch 3 and then turning it on, the processes of step ST401 and subsequent steps are repeated.

The operation of the power transmission control device 10 according to the first embodiment will be described.

FIG. 6 is a flowchart for explaining the operation of the power transmission control device 10 according to the first embodiment.

Note that, in the following description using FIG. 6, the operation of the power transmission control device 10 will be described assuming that the power transmission device 1 is activated for the first time after installation.

The operations of steps ST601 to ST604 and step ST609 described below are operations of the "activation process", and the operations of steps ST605 to ST610 are operations of the "steady power transmission process".

In the following description using FIG. 6, although description is omitted, in the power transmission control device 10, the power reception unit 101 performs the operation of receiving power supplied from the commercial power supply and outputting the power to the high-frequency inverter circuit 102.

The activation signal receiving unit 1051 stands by until an activation signal transmitted from the power reception apparatus 2 (see steps ST401 to ST402 in FIG. 4) is received (in the case of "NO" in step ST601). Having received the activation signal transmitted from the power reception apparatus 2 (in the case of "YES" in step ST601), the activation signal receiving unit 1051 outputs the received activation signal to the power transmission controlling unit 104.

The antenna control unit 1041 of the power transmission controlling unit 104 causes the power transmission unit 1042 to supply high-frequency power to all the transmission antennas 11 when an activation signal is output from the activation signal receiving unit 1051 in step ST601 (step ST602).

Here, the antenna control unit 1041 determines whether or not the power transmission device 1 is activated normally (step ST603). Specifically, the antenna control unit 1041 determines whether or not the voltage level or the power level of the high-frequency power supplied from the commercial power source and output from the high-frequency inverter circuit 102 reaches a preset voltage level or power level. The antenna control unit 1041 determines that the power transmission device 1 is normally activated if the voltage level or the power level of the high-frequency power supplied from the commercial power source and output from the high-frequency inverter circuit 102 reaches a preset voltage level or power level.

If the antenna control unit 1041 determines that the power transmission device 1 is activated normally (in the case of "YES" in step ST603), the antenna control unit 1041 proceeds to step ST604.

If the antenna control unit 1041 determines that the power transmission device 1 is not activated normally (in the case of "NO" in step ST603), the antenna control unit 1041 causes the power transmission unit 1042 to stop the supply of high-frequency power (step ST609).

Note that, in step ST609, the supply of high-frequency power to all the transmission antennas 11 performed by the power transmission unit 1042 is stopped.

Then, the supply of high-frequency power to the transmission antenna 11 remains stopped until an activation signal is transmitted again from the power reception apparatus 2 (step ST601).

In step ST604, the response reception unit 10521 of the communication unit 105 determines whether or not a response signal (see step ST404 in FIG. 4) has been received from the power reception apparatus 2 as a result of the supply of high-frequency power to the transmission antennas 11 from the power transmission unit 1042 in step ST602 (step ST604).

In step ST604, if the response reception unit 10521 has received no response signal (in the case of "NO" in step ST604), the process proceeds to step ST609.

In step ST604, if the response reception unit 10521 has received a response signal (in the case of "YES" in step ST604), the response reception unit 10521 outputs the received response signal to the power transmission controlling unit 104.

When the response signal is output from the response reception unit 10521 in step ST604, the antenna control unit 1041 starts the "steady power transmission process". Specifically, the antenna control unit 1041 determines a transmission antenna 11 that needs to be continuously supplied with the high-frequency power among the multiple transmission antennas 11, and starts a process for continuing the supply of high-frequency power to the transmission antenna 11 that the power transmission unit 1042 has been caused to perform in step ST602.

The antenna determination unit 1043 of the power transmission controlling unit 104 determines a power transmission target antenna depending on the response signal that the response reception unit 10521 has received from the power reception apparatus 2 in step ST604 (step ST605).

Here, the method for the antenna determination unit 1043 to determine a power transmission target antenna will be described using a specific example.

For example, in step ST604, let us assume that the response reception unit 10521 has received response signals from three power reception apparatuses 2.

In this case, the antenna determination unit 1043 specifies three transmission antennas 11 in better states in a descending order among all the transmission antennas 11 on the basis of the state of the non-contact power supply by each of the transmission antennas 11, and determines those three transmission antennas 11 as power transmission target antennas.

The antenna determination unit 1043 is only required to determine the non-contact power supply state on the basis of the voltage level or the current level of high-frequency power output from the high-frequency inverter circuit 102.

It is also assumed that, for example, one reception antenna 211 is installed across multiple transmission antennas 11.

As an example, as illustrated in FIG. 5, it is assumed that the reception antenna **X** (211) is installed across the transmission antenna **A** (11a) and the transmission antenna **B** (11b).

In this case, the antenna determination unit 1043 determines a power transmission target antenna on the basis of the state of non-contact power supply by the transmission antennas 11.

In the example of FIG. 5, the area where the reception antenna **X** (211) faces the transmission antenna **B** (11b) is larger than the area where the reception antenna **X** (211) faces the transmission antenna **A** (11a). Therefore, with regards to the high-frequency power that the power transmission control device 10 supplies to each of the transmission antennas 11, the high-frequency power supplied to the transmission antenna 11B (11b) is greater than the high-frequency power supplied to the transmission antenna 11A (11a). That is, the state of non-contact power supply to the reception antenna **X** (211) from the transmission antenna **B** (11b) is better than the state of non-contact power supply to the reception antenna **X** (211) from the transmission antenna **A** (11a).

The antenna determination unit 1043 determines the transmission antenna **B** (11b), which has a relatively better non-contact power supply state, as the power transmission target antenna.

The antenna determination unit 1043 outputs information of the determined power transmission target antenna to the antenna control unit 1041.

Specifically, for example, the antenna determination unit 1043 assigns a power transmission target flag to information of each of the transmission antennas 11 that the power transmission control device 10 internally has. The antenna control unit 1041 determines whether or not a transmission antenna 11 is a power transmission target antenna on the basis of the power transmission target flag.

The antenna control unit 1041 causes the power transmission unit 1042 to continue to supply the high-frequency power to the power transmission target antenna determined by the antenna determination unit 1043 in step ST605 and to stop the supply of the high-frequency power to transmission antennas 11 other than the power transmission target antenna (step ST606).

As a result, power is supplied from the power transmission target antenna to the power reception apparatus 2 to which the power is to be actually supplied, whereas the supply of high-frequency power to transmission antennas 11 other than the power transmission target antenna is stopped, and thus unnecessary radiation of electromagnetic waves is prevented.

The foreign matter detecting unit 103 detects a foreign matter present between the power transmission device 1 and the power reception device 21 on the basis of the supply state of high-frequency power to the power transmission target antenna while the power transmission unit 1042 is supplying high-frequency power to the power transmission target antenna (step ST607).

In step ST607, the foreign matter detecting unit 103 outputs information indicating that the foreign matter has been detected to the power transmission controlling unit 104 when a foreign matter is detected (in the case of "YES" in step ST607).

The antenna control unit 1041 of the power transmission controlling unit 104 outputs an error signal to the communication unit 105 (step ST610), and proceeds to step ST609.

When the error signal is output from the antenna control unit 1041, the error notification unit 10522 of the communication unit 105 transmits the error signal to the power reception apparatus 2.

In the power reception apparatus 2, the error reception unit 2222 of the communication unit 22 receives the error signal and outputs the error signal to the control unit 24.

Note that the antenna control unit 1041 initializes the power transmission target flag assigned to the power transmission target antenna for which a foreign matter has been detected between the power reception device 21 and the power transmission target antenna when information indicating that the foreign matter has been detected is output from the foreign matter detecting unit 103.

If the foreign matter detecting unit 103 detects a foreign matter in step ST607, and the antenna control unit 1041 outputs an error signal to the communication unit 105, then, in step ST609, the antenna control unit 1041 causes the power transmission unit 1042 to stop the supply of high-frequency power to transmission antennas 11 other than the power transmission target antenna. The antenna control unit 1041 is only required to determine whether or not a transmission antenna 11 is a power transmission target antenna on the basis of a power transmission target flag.

Here, the operations of steps ST607 to ST610 will be described with a specific example.

For example, let us assume that four power reception apparatuses 2 are installed on a floor and that a DVD, as a foreign matter, is caught under one of the four power reception apparatuses 2. In this case, response signals are transmitted from only three power reception devices 21. However, as described above, the response reception unit 10521 cannot determine which power reception apparatus 2 has transmitted each of response signals. That is, the power transmission control device 10 cannot determine which power transmission target antenna is performing unnecessary non-contact power supply to the DVD

Therefore, in the power transmission control device 10, the foreign matter detecting unit 103 performs foreign matter detection in step ST607 after the "steady power transmission process" is started, and if a foreign matter is detected, the power transmission controlling unit 104 stops the supply of high-frequency power to transmission antennas 11 other than power transmission target antennas. Note that, as for a transmission antenna 11 for which a foreign matter has been detected, the power transmission target flag is initialized by the antenna control unit 1041 so that the transmission antenna 11 is not determined as a power transmission target antenna.

At this point, error information is temporarily output in the power reception apparatus 2, and thus a user detects that an error is occurring and that no power is supplied to the power reception apparatus 2, and turns on the switch 3 again for example after removing the foreign matter. Then, the processes of step ST601 and subsequent steps are performed again.

As described above, since the power transmission control device 10 detects a foreign matter during the "steady power transmission process", it is possible to reduce the possibility of, for example, a skin burn of a user, deformation, melting, burning, or a breakage of the foreign matter, or outbreak of a fire due to ignition of the foreign matter because of overheating of the foreign matter with continued power transmission to the foreign matter.

On the other hand, in step ST607, if the foreign matter detecting unit 103 detects no foreign matters (in the case of "NO" in step ST607), the process proceeds to step ST608.

The antenna control unit 1041 determines whether or not non-contact power supply to the power reception device 21 is performed via the power transmission target antenna (step ST608).

The antenna control unit 1041 is only required to determine whether or not the power transmission target antenna is performing non-contact power supply to the power reception device 21 on the basis of the voltage level or the current level of the high-frequency power output from the high-frequency inverter circuit 102.

In step ST608, if the antenna control unit 1041 determines that the power transmission target antenna is performing non-contact power supply to the power reception device 21 (in the case of "YES" in step ST608), the process returns to step ST605 and the "steady power transmission process" is repeated. Specifically, the antenna control unit 1041 causes the power transmission unit 1042 to continue the current supply of high-frequency power to the power transmission target antenna.

Therefore, the power transmission unit 1042 continues to supply high-frequency power to the power transmission target antenna, and continues to stop the high-frequency power to transmission antennas 11 other than the power transmission target antenna.

Thereafter, high-frequency power is supplied to the power transmission target antenna, and the "steady power transmission process" of step ST605 and subsequent steps is repeated as long as no abnormality occurs such as foreign matter detection.

On the other hand, if the antenna control unit 1041 determines in step ST608 that the power transmission target antenna is not performing non-contact power supply to the power reception device 21 (in the case of "NO" in step ST608), the antenna control unit 1041 determines that an abnormality has occurred in the power transmission state, and the process proceeds to step ST610. Note that in a case where there are multiple power transmission target antennas, the antenna control unit 1041 determines that the power transmission target antennas are not performing non-contact power supply to the power reception device 21 if it determines that any one of the power transmission target antennas is not performing non-contact power supply to the power reception device 21.

At this point, the antenna control unit 1041 initializes the power transmission target flag assigned to a power transmission target antenna that is determined as not performing non-contact power supply to the power reception device 21.

For example, let as assume that the user has moved the power reception apparatus 2 and that the installation position of the power reception apparatus 2 has been changed. Then, the relative position between the power transmission device 1 and the power reception apparatus 2 changes, which may disable non-contact power supply from the power transmission device 1 to the power reception device 21 of the power reception apparatus 2. The antenna control unit 1041 determines that the non-contact power supply from the power transmission device 1 to the power reception device 21 has been stopped.

After proceeding to step ST610, the antenna control unit 1041 outputs an error signal to the communication unit 105 (step ST610). Then, the antenna control unit 1041 causes the power transmission unit 1042 to stop the supply of high-frequency power to the power transmission target antenna (step ST609).

The user recognizes that an error is occurring and that power supply to the power reception apparatus 2 has been stopped, and the user turns on the switch 3 again, for example, after moving the power reception apparatus 2 into an area where power can be supplied from any of the transmission antennas 11 if the current position of the power reception apparatus 2 is outside the area, or while the power reception apparatus 2 is left in the position if the current position of the power reception apparatus 2 is in the area where power can be supplied. Then, the processes of step ST601 and subsequent steps are performed again.

Note that although the operation is performed in the order of steps ST605 to ST607 in the above description, the operation of step ST607 may be performed before step ST605 and step ST606.

The operation of the power transmission control device 10 has been described above assuming that the power transmission control device 10 is activated for the first time after installation.

Hereinafter, the operation in a case where the power transmission control device 10 is activated for the second time or more after installation will be described.

Regarding the operation of the power reception apparatus 2, the specific operation is the same regardless of whether the power transmission device 1 is activated for the first time after installation or for the second time or more after installation. However, if it is already set in the power transmission control device 10 to supply power to the power reception apparatus 2, the power reception apparatus 2 does not perform the operations of steps ST401 to ST404 described in FIG. 4 but is driven by power supplied from the power transmission device 1 (step ST405). To be already set in the power transmission control device 10 to supply power to the power reception apparatus 2 means that the transmission antenna 11 corresponding to the reception antenna 211 of the power reception apparatus 2 is determined as a power transmission target antenna in the power transmission control device 10.

In a case where the power transmission control device 10 is activated for the second time or more after installation, and there are already one or more power reception apparatuses 2 to which non-contact power supply is already performed from one or more power transmission target antennas when the activation signal receiving unit 1051 outputs an activation signal to cause the power transmission unit 1042 to supply high-frequency power to the transmission antennas 11, the antenna control unit 1041 of the power transmission controlling unit 104 maintains the power transmission target antenna as the power transmission target antenna and causes the power transmission unit 1042 to supply high-frequency power to transmission antennas 11 other than the power transmission target antenna (steps ST601 to ST602). The antenna control unit 1041 is only required to specify the power transmission target antenna on the basis of, for example, a power transmission target flag.

As described by referring to FIG. 6, the power transmission control device 10 according to the first embodiment continues to supply high-frequency power to a power transmission target antenna once so determined unless an abnormal event occurs such as detection of a foreign matter or non-contact power supply to the power reception device 21 becomes impossible due to a change of position of the power reception apparatus 2.

As described above, in the non-contact power supply system 1000, an activation signal is transmitted to the power transmission control device 10 when the switch 3 is turned on from the OFF state in the power reception apparatus 2. In the power transmission control device 10, high-frequency power is supplied to the transmission antennas 11 once when the activation signal transmitted from the power reception apparatus 2 is received, and if it is then determined that the supply of the high-frequency power is not necessary, high-frequency power is not supplied to unnecessary transmission antennas 11 thereafter until the activation signal is received again. That is, unlike in the related art described above, power transmission does not need to be performed at regular time intervals. As a result, it is possible to reduce periodic unnecessary radiation of electromagnetic waves to an area where no power reception apparatus 2 is installed. This can reduce the possibility that unnecessary electromagnetic waves may affect the power reception apparatus 2 installed in the vicinity of the electromagnetic waves.

Furthermore, in the above-described related art, the power reception apparatus 2 needs to include a battery having sufficient capacity for driving the power reception apparatus 2 in preparation to a cutoff of the power supply at regular time intervals in a case where the power reception apparatus 2 that requires constant power supply is installed to face the non-contact power supply unit.

On the other hand, in the power transmission control device 10 according to the first embodiment, the supply of high-frequency power to the power transmission target antenna once determined so is continued unless an abnormality occurs in the non-contact power supply environment to the power reception apparatus 2. Therefore, the power reception apparatus 2 can be continuously used by being supplied with power from the power transmission device 1, even if the power reception apparatus 2 does not include a battery having a sufficient capacity to drive the power reception apparatus 2.

The power reception apparatus 2 needs power for transmitting an activation signal; however, it is sufficient that the power has a capacity sufficient for transmission of the activation signal. Therefore, the power reception apparatus 2 does not need power, having a capacity sufficient for driving the power reception apparatus 2, in advance. Furthermore, in the power reception apparatus 2, the activation signal transmitting unit 221 only needs to have a function of transmitting an activation signal, and therefore, for example, advanced communication functions such as those a smartphone has are not required for transmitting an activation signal.

Furthermore, in the above-described related art, whether or not the non-contact power reception unit is disposed so as to face the non-contact power supply unit is detected depending on a change in the impedance when the power receiving side is viewed from the non-contact power supply unit only when power transmission from the non-contact power supply unit to the power receiving side is turned on to perform the power transmission during normal power supply operation at regular time intervals.

In this case, for example even when a state occurs in which a foreign matter is caught between the non-contact power reception unit and the non-contact power supply unit during normal power supply operation, there is a possibility that power transmission is continued continuously. If continuous power transmission is continued with a foreign matter interposed, there is a possibility that lines of magnetic force pass through the foreign matter to cause an overcurrent to flow, thereby generating heat in the foreign matter. A high temperature of the foreign matter may result in, for example, a skin burn of a user, deformation, melting, burning, or a breakage of the foreign matter, or outbreak of a fire due to ignition of the foreign matter.

On the other hand, the power transmission control device 10 according to the first embodiment detects a foreign matter during the steady power transmission process, and thus it is possible to reduce the possibility of, for example, a skin burn of a user, deformation, melting, burning, or a breakage of the foreign matter, or outbreak of a fire due to ignition of the foreign matter because of overheating of the foreign matter.

The power transmission control device 10 according to the first embodiment does not detect the impedance as viewed toward the power receiving side when a power transmission target antenna is determined, and thus the circuit size is not increased even in high-frequency transmission in the frequency within the bands of mega-hertz or greater, thereby making it possible to reduce the size and the cost of the device.

Moreover, since the power transmission control device 10 according to the first embodiment includes the foreign matter detecting unit 103, and the foreign matter detection operation is completed in the power transmission control device 10, foreign matters can be detected regardless of whether or not the power reception device 21 is present in an area where the power transmission control device 10 can supply power via a transmission antenna 11.

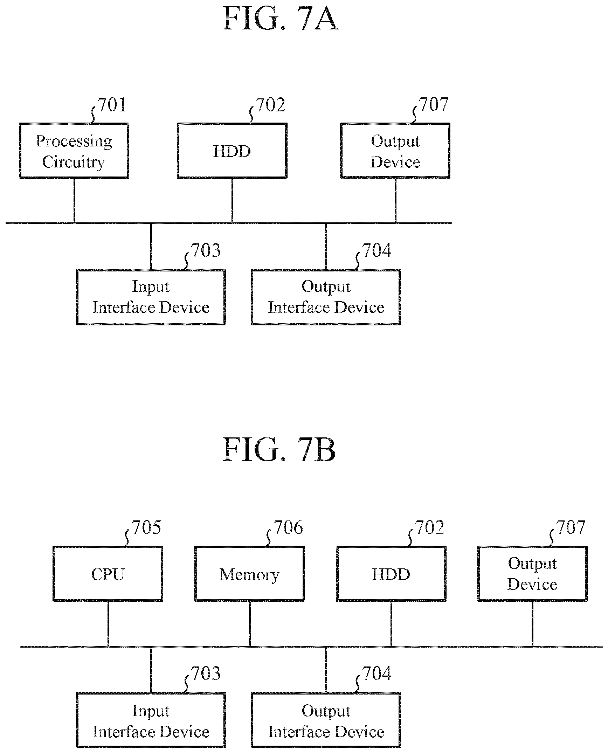

FIGS. 7A and 7B are diagrams each illustrating an exemplary hardware configuration of the power reception apparatus 2 according to the first embodiment.

In the first embodiment, the functions of the communication unit 22 and the control unit 24 are implemented by a processing circuitry 701. That is, the power reception apparatus 2 includes the processing circuitry 701 for causing the power transmission device 1 to transmit an activation signal for causing high-frequency power to be supplied to the multiple transmission antennas 11 and controlling to operate using the power supplied from the power transmission device 1.

The processing circuitry 701 may be dedicated hardware as illustrated in FIG. 7A or may be a central processing unit (CPU) 705 for executing a program stored in a memory 706 as illustrated in FIG. 7B.

In a case where the processing circuitry 701 is dedicated hardware, the processing circuitry 701 corresponds to, for example, a single circuit, a composite circuit, a programmed processor, a parallel programmed processor, an application specific integrated circuit (ASIC), a field-programmable gate array (FPGA), or a combination thereof.

In a case where the processing circuitry 701 is the CPU 705, the functions of the communication unit 22 and the control unit 24 are implemented by software, firmware, or a combination of software and firmware. That is, the communication unit 22 and the control unit 24 are implemented by the CPU 705 that executes programs stored in a hard disk drive (HDD) 702, the memory 706, or the like or a processing circuitry such as a system large-scale integration (LSI). It is also understood that programs stored in the HDD 702, the memory 706, and the like cause a computer to execute the procedures and methods of the communication unit 22 and the control unit 24. Here, the memory 706 may be a nonvolatile or volatile semiconductor memory such as a random access memory (RAM), a read only memory (ROM), a flash memory, an erasable programmable read only memory (EPROM), or an electrically erasable programmable read only memory (EEPROM), a magnetic disc, a flexible disc, an optical disc, a compact disc, a mini disc, a digital versatile disc (DVD), or the like.

Note that some of the functions of the communication unit 22 and the control unit 24 may be implemented by dedicated hardware, and another part thereof may be implemented by software or firmware. For example, the function of the communication unit 22 may be implemented by the processing circuitry 701 as dedicated hardware, and the function of the control unit 24 may be implemented by the processing circuitry reading and executing a program stored in the memory 706.

In addition, the power reception apparatus 2 includes an input interface device 703 and an output interface device 704 that communicate with an external device such as the power transmission device 1.

In addition, the power reception apparatus 2 includes an output device 707. The output device 707 is a display, a level meter, a speech output device, or the like.

The power reception apparatus 2 also includes the switch 3 (not illustrated in FIGS. 7A and 7B).

The power reception apparatus 2 also includes the reception antenna 211 (not illustrated in FIGS. 7A and 7B).

The power reception apparatus 2 includes a power supply device including a button battery, a small rechargeable battery, a small-capacity battery, or a capacitor (not illustrated in FIGS. 7A and 7B). The power supply unit 25 includes a power supply device.

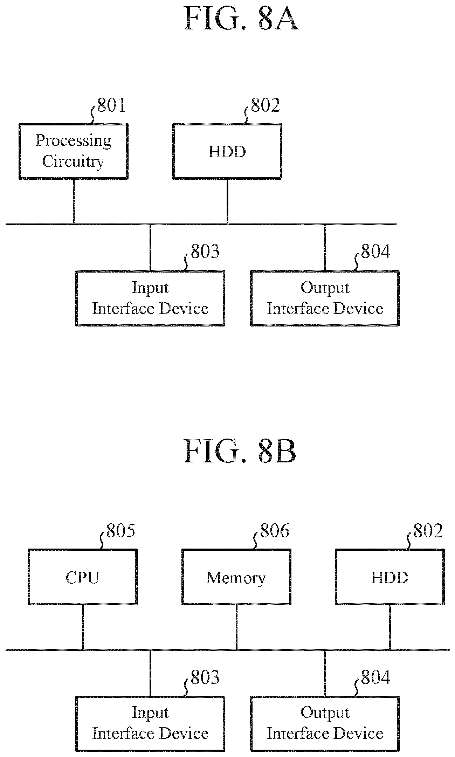

FIGS. 8A and 8B are diagrams each illustrating an exemplary hardware configuration of the power transmission control device 10 according to the first embodiment.

In the first embodiment, the functions of the power reception unit 101, the foreign matter detecting unit 103, the power transmission controlling unit 104, and the communication unit 105 are implemented by a processing circuitry 801. That is, the power transmission control device 10 includes a processing circuitry 801 for determining a power transmission target antenna for supplying power to the power reception device 21 included in the power reception apparatus 2 on the basis of an activation signal transmitted from the power reception apparatus 2, supplying high-frequency power to the power transmission target antenna, and performing control to stop the supply of high-frequency power to transmission antennas 11 other than the power transmission target antenna.

The processing circuitry 801 may be dedicated hardware as illustrated in FIG. 8A or may be a central processing unit (CPU) 805 for executing a program stored in a memory 806 as illustrated in FIG. 8B.

In a case where the processing circuitry 801 is dedicated hardware, the processing circuitry 801 corresponds to, for example, a single circuit, a composite circuit, a programmed processor, a parallel programmed processor, an application specific integrated circuit (ASIC), a field-programmable gate array (FPGA), or a combination thereof.

In a case where the processing circuitry 801 is the CPU 805, the functions of the power reception unit 101, the foreign matter detecting unit 103, the power transmission controlling unit 104, and the communication unit 105 are implemented by software, firmware, or a combination of software and firmware. That is, the power reception unit 101, the foreign matter detecting unit 103, the power transmission controlling unit 104, and the communication unit 105 are implemented by the CPU 805 that executes programs stored in a hard disk drive (HDD) 802, the memory 806, or the like or a processing circuitry such as a system large-scale integration (LSI). It is also understood that programs stored in the HDD 802, the memory 806, and the like cause a computer to execute the procedures and methods of the power reception unit 101, the foreign matter detecting unit 103, the power transmission controlling unit 104, and the communication unit 105. Here, the memory 806 may be a nonvolatile or volatile semiconductor memory such as a random access memory (RAM), a read only memory (ROM), a flash memory, an erasable programmable read only memory (EPROM), or an electrically erasable programmable read only memory (EEPROM), a magnetic disc, a flexible disc, an optical disc, a compact disc, a mini disc, a digital versatile disc (DVD), or the like.

Note that some of the functions of the power reception unit 101, the foreign matter detecting unit 103, the power transmission controlling unit 104, and the communication unit 105 may be implemented by dedicated hardware with another part thereof implemented by software or firmware. For example, the function of the power reception unit 101 may be implemented by the processing circuitry 801 as dedicated hardware, and the functions of the foreign matter detecting unit 103, the power transmission controlling unit 104, and the communication unit 105 may be implemented by the processing circuitry reading and executing a program stored in the memory 806.

The power transmission control device 10 also includes an input interface device 803 and an output interface device 804 that communicate with an external device such as the transmission antennas 11 or the power reception apparatus 2.

The power transmission control device 10 further includes the high-frequency inverter circuit 102 (not illustrated in FIGS. 8A and 8B).

As described above, according to the first embodiment, in the non-contact power supply system 1000, the power reception apparatus 2 includes: the reception antenna 211 capable of receiving power from any of the multiple transmission antennas 11 included in the power transmission device 1 in a non-contact manner; the power supply unit 25; and the activation signal transmitting unit 221 for transmitting an activation signal for activating the multiple transmission antennas 11 to the power transmission device 1 when supplied with power from the power supply unit 25 and an operation instruction is received. The power transmission device 1 includes: the activation signal receiving unit 1051 for receiving the activation signal transmitted from the activation signal transmitting unit 221; the power transmission unit 1042 for starting power supply to the multiple transmission antennas 11 when the activation signal receiving unit 1051 receives the activation signal; and the antenna determination unit 1043 for determining a power transmission target antenna to which the power supply from the power transmission unit 1042 is to be continued among the multiple transmission antennas 11, in which non-contact power supply to the reception antenna 211 of the power reception apparatus 2 is performed with the power transmission unit 1042 supplying power to the power transmission target antenna determined by the antenna determination unit 1043. Therefore, it is possible to reduce unnecessary radiation of electromagnetic waves to an area where no power reception apparatus 2 to be supplied with power from the power transmission device 1 is installed. This can reduce the possibility that unnecessary electromagnetic waves may affect the power reception apparatus 2 installed in the vicinity of the electromagnetic waves.

In addition, the power reception apparatus 2 transmits an activation signal to the power transmission control device 10 with power of a small capacity, for example, advanced communication functions such as those a smartphone has or a battery having a large capacity are not required for transmitting an activation signal. As a result, the power reception apparatus 2 can transmit an activation signal for activating the multiple transmission antennas 11 with a simple configuration.

Also, in the power transmission control device 10 included in the power transmission device 1, the antenna control unit 1041 causes the power transmission unit 1042 to supply power to the power transmission target antenna, and then to maintain the state of supplying power to the power transmission target antenna until the activation signal is output again from the activation signal transmitting unit 221 while maintaining the state of halting the power supply to transmission antennas other than the power transmission target antenna.

The supply of high-frequency power to the power transmission target antenna once determined so is continued unless an abnormality occurs in the power transmission environment, and thus the power reception apparatus 2 can be used continuously with the power supply from the power transmission device 1 even without a battery.

In addition, since the power transmission control device 10 detects a foreign matter during the steady power transmission process, it is possible to reduce the possibility of, for example, a skin burn of a user, deformation, melting, burning, or a breakage of the foreign matter, or outbreak of a fire due to ignition of the foreign matter because of overheating of the foreign matter.

Furthermore, the power transmission control device 10 includes the foreign matter detecting unit 103 for detecting a foreign matter present between a transmission antenna and a reception antenna 211 included in the power reception apparatus 2 on the basis of the power supply state to the power transmission target antenna while the power transmission unit 1042 is supplying power to the power transmission target antenna, and the antenna control unit 1041 causes the power transmission unit 1042 to stop the supply of power to the power transmission target antenna when the foreign matter detecting unit 103 detects a foreign matter.

Since the foreign matter detection operation is completed in the power transmission control device 10, foreign matters can be detected regardless of whether or not a power reception device 21 is present in an area where the power transmission control device 10 can supply power via the transmission antenna 11.

The power transmission control device 10 does not detect the impedance as viewed from the power receiving side when a power transmission target antenna is determined, and thus the circuit size is not increased even in high-frequency transmission in the frequency within the bands of mega-hertz or greater, thereby making it possible to reduce the size and cost of the device.

### Second Embodiment

In the first embodiment, in the non-contact power supply system 1000, the power transmission device 1 supplies high-frequency power from the single power transmission control device 10 to multiple transmission antennas 11.

In a second embodiment, an embodiment will be described in which a power transmission device 1 includes power transmission control devices 10 each corresponding to one of multiple transmission antennas 11.

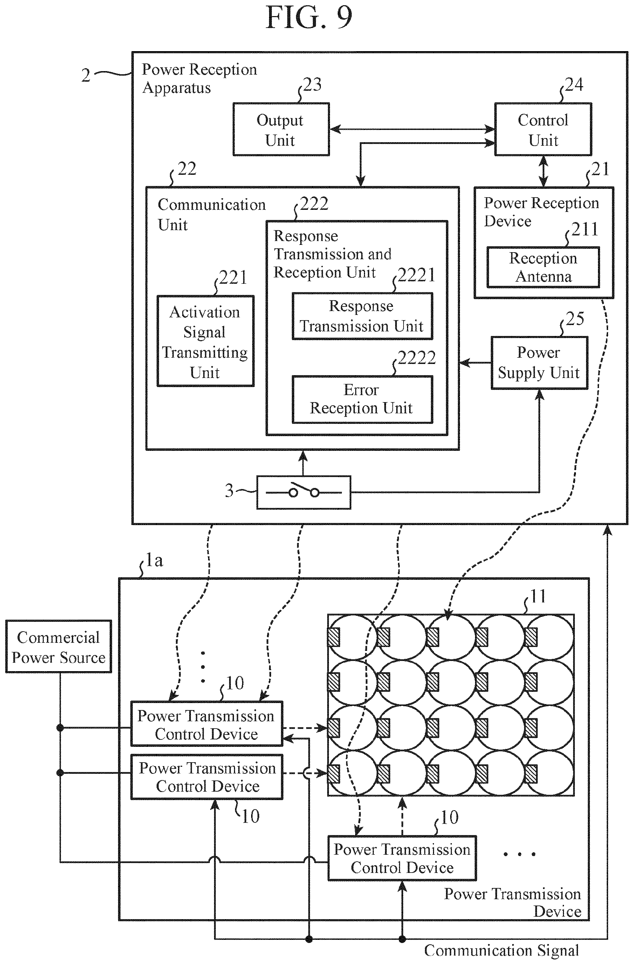

FIG. 9 is a diagram for describing a configuration example of a power transmission device 1a and a power reception apparatus 2 in a non-contact power supply system 1000 according to the second embodiment.

The non-contact power supply system 1000 according to the second embodiment is different from the non-contact power supply system 1000 according to the first embodiment in that the power transmission device 1a includes the power transmission control devices 10 each corresponding to one of the multiple transmission antennas 11. The power transmission control device 10 and the transmission antennas 11 are connected by, for example, cables.

Other configurations are similar to those of the non-contact power supply system 1000 according to the first embodiment, and thus redundant description will be omitted.

The specific configuration of each of the power transmission control devices 10 included in the power transmission device 1a is similar to the specific configuration of the power transmission control device 10 described by referring to FIG. 2B in the first embodiment, and thus redundant description is omitted.

Note that, in FIG. 9, components of each of the power transmission control devices 10 are not illustrated.

In FIG. 9, each of the power transmission control devices 10 is provided externally to the transmission antennas 11 and is coupled to a corresponding transmission antenna 11; however, the power transmission control devices 10 may be incorporated in the transmission antennas 11 to obtain integrated transmission antennas.

The operation of the power reception apparatus 2 according to the second embodiment will be described.

The operation flow of the power reception apparatus 2 according to the second embodiment is basically the same as the operation flow of the power reception apparatus 2 described with reference to FIG. 4 in the first embodiment, and the specific operation in the second embodiment is as follows.

In the power reception apparatus 2 according to the second embodiment, if the switch 3 is turned on from the OFF state (in the case of "YES" in step ST401), the activation signal transmitting unit 221 receives power from the power supply unit 25 and transmits an activation signal to each of the power transmission control devices 10 with the power (step ST402).

The response transmission unit 2221 transmits a response signal to a communication unit 105 of each of the power transmission control devices 10 under the control of the control unit 24 (step ST404).

Other operations have already been explained in the first embodiment, and thus redundant description is omitted.

In addition, when an error signal is transmitted from the power transmission device 1 while it is being driven by power supply from the power transmission device 1, the error reception unit 2222 receives the error signal.

When the error signal is output from the error reception unit 2222, the control unit 24 causes the output unit 23 to output error information. In the second embodiment, there are two types of error information that the control unit 24 outputs when error information indicating that a foreign matter has been detected is transmitted from the power transmission device 1 or when an error signal indicating that power supply has been stopped is transmitted. The specific content of the operation by the control unit 24 to cause error information to be output in the power reception apparatus 2 will be described in the description of the operation of the power transmission control device 10 with reference to FIG. 6 described later.

The operation of the power transmission control device 10 according to the second embodiment will be described.

Since the operation flow of a power transmission control device 10 according to the second embodiment is basically the same as the operation flow of the power transmission control device 10 described by referring to FIG. 6 in the first embodiment, the specific operation of a power transmission control device 10 according to the second embodiment will be described by referring to FIG. 6.

Note that, in the second embodiment, each of the power transmission control devices 10 performs the operation described below.

In the following description, the operation of a power transmission control device 10 will be described assuming that the power transmission device 1a is activated for the first time after installation.

The activation signal receiving unit 1051 stands by until the activation signal transmitted from the power reception apparatus 2 is received (in the case of "NO" in step ST601), and the activation signal receiving unit 1051 outputs the received activation signal to the power transmission controlling unit 104 when the activation signal transmitted from the power reception apparatus 2 is received (in the case of "YES" in step ST601). The specific operation is similar to the operation described in the first embodiment.

The antenna control unit 1041 of the power transmission controlling unit 104 causes the power transmission unit 1042 to supply high-frequency power to a corresponding transmission antenna 11 when an activation signal is output from the activation signal receiving unit 1051 in step ST601 (step ST602).

Here, the antenna control unit 1041 determines whether or not the power transmission device 1a is activated normally (step ST603). The specific operation is similar to the operation described in the first embodiment, and thus redundant description is omitted.

If the antenna control unit 1041 determines that the power transmission device 1a is activated normally (in the case of "YES" in step ST603), the antenna control unit 1041 proceeds to step ST604.

If the antenna control unit 1041 determines that the power transmission device 1a is not activated normally (in the case of "NO" in step ST603), the antenna control unit 1041 causes the power transmission unit 1042 to stop the supply of high-frequency power (step ST609).

Note that, in step ST609, the supply of high-frequency power to the corresponding transmission antenna 11 performed by the power transmission unit 1042 is stopped.

Then, the supply of the high-frequency power to the transmission antennas 11 remains stopped until the user turns on the switch 3 again which is in the OFF state and the activation signal receiving unit 1051 receives an activation signal (step ST601).

In step ST604, the response reception unit 10521 of the communication unit 105 determines whether or not a response signal transmitted from the power reception apparatus 2 has been received (step ST604).

In the second embodiment, the power reception apparatus 2 transmits a response signal to every power transmission control device 10.

Therefore, even when the response reception unit 10521 of a certain power transmission control device 10 receives a response signal, the response signal is not necessarily a response signal due to the non-contact power supply of the power reception apparatus 2 from the transmission antenna 11 to which the power transmission unit 1042 of the power transmission control device 10 has supplied high-frequency power in step ST602.

In step ST604, if the response reception unit 10521 has received no response signal (in the case of "NO" in step ST604), the process proceeds to step ST609.

In step ST604, if the response reception unit 10521 has received a response signal (in the case of "YES" in step ST604), the response reception unit 10521 outputs the received response signal to the power transmission controlling unit 104.

When the response signal is output from the response reception unit 10521 in step ST604, the antenna control unit 1041 starts the "steady power transmission process". Specifically, in a case where the corresponding transmission antenna 11 needs to continuously supply high-frequency power, the antenna control unit 1041 starts a process for continuing the supply of high-frequency power to the transmission antenna 11 that the power transmission unit 1042 has been caused to perform in step ST602.

The antenna determination unit 1043 of the power transmission controlling unit 104 determines a power transmission target antenna depending on the response signal that the response reception unit 10521 has received from the power reception apparatus 2 in step ST604 (step ST605).

The specific operation of step ST605 is different from the specific operation of step ST605 described in the first embodiment.

In the second embodiment, the power transmission control device 10 supplies high-frequency power to only a single corresponding transmission antenna 11, and thus the antenna determination unit 1043 cannot determine whether or not the corresponding transmission antenna 11 is a power transmission target antenna through comparison with the power transmission state to multiple transmission antennas 11.

Therefore, the antenna determination unit 1043 uses a preset threshold value (fourth threshold value) and determines whether or not the corresponding transmission antenna 11 is a power transmission target antenna depending on whether or not the voltage level or the current level for supplying high-frequency power to the corresponding transmission antenna 11 exceeds a value equal to or more than the fourth threshold value. Regarding the determination whether or not the voltage level or the current level exceeds the fourth threshold value, a user can set as appropriate whether the antenna determination unit 1043 determines whether or not the voltage level or the current level exceeds the fourth threshold value or whether or not the voltage level or the current level falls below the fourth threshold value.

Note that, in the second embodiment, it is assumed that the power transmission control devices 10 included in the power transmission device 1a are simultaneously activated. On this assumption, as described above, it is not possible to determine whether or not a transmission antenna 11 is a power transmission target antenna in comparison with the supply state of high-frequency power to the multiple transmission antennas 11, and the antenna determination unit 1043 determines a power transmission target antenna on the basis of the fourth threshold value. However, without being limited thereto, it is also possible to provide a time difference in the activation of each of the power transmission control devices 10 in the power transmission device 1a. In this case, it is possible to identify a power transmission state corresponding to the power reception apparatus 2 in the power transmission device 1a.

When the antenna determination unit 1043 determines that the corresponding transmission antenna 11 is a power transmission target antenna, the antenna control unit 1041 causes the power transmission unit 1042 to continue to supply high-frequency power to the power transmission target antenna. On the other hand, if the antenna determination unit 1043 does not determine the corresponding transmission antenna 11 as a power transmission target antenna, the antenna control unit 1041 causes the power transmission unit 1042 to stop the supply of high-frequency power to the corresponding transmission antenna 11 (step ST606).

The foreign matter detecting unit 103 detects a foreign matter present between the power transmission device 1 and the power reception device 21 on the basis of the supply state of high-frequency power to the power transmission target antenna while the power transmission unit 1042 is supplying high-frequency power to the power transmission target antenna (step ST607).

In step ST607, the foreign matter detecting unit 103 outputs information indicating that the foreign matter has been detected to the power transmission controlling unit 104 when a foreign matter is detected (in the case of "YES" in step ST607).

The antenna control unit 1041 of the power transmission controlling unit 104 outputs an error signal to the communication unit 105 (step ST610).

When the error signal is output from the antenna control unit 1041, the error notification unit 10522 of the communication unit 105 transmits the error signal to the power reception apparatus 2.

In the power reception apparatus 2, the error reception unit 2222 of the communication unit 22 receives the error signal and outputs the error signal to the control unit 24. In the second embodiment, the power reception apparatus 2 communicates with each of the power transmission control devices 10. In the power reception apparatus 2, the control unit 24 determines whether or not the voltage level supplied to the power reception device 21 is within a normal range when the error reception unit 2222 receives an error signal output from each of the power transmission control devices 10. The control unit 24 can determine that no foreign matter is detected between the reception antenna 211 of the power reception apparatus 2 including the control unit 24 and the transmission antenna 11 if the voltage level supplied to the power reception device 21 is within the normal range. However, the control unit 24 cannot determine in which power reception apparatus 2, other than the power reception apparatus 2 including the control unit 24, the foreign matter has been detected between the reception antenna 211 and the transmission antenna 11. Therefore, although the control unit 24 cannot specify in which transmission antenna 11 the foreign matter has been detected, the control unit 24 causes the output unit 23 to output error information indicating that the foreign matter has been detected.

On the other hand, if the control unit 24 determines that the voltage level supplied to the power reception device 21 is below the normal range, the control unit 24 causes the output unit 23 to output error information indicating that a foreign matter is detected between the reception antenna 211 of the power reception apparatus 2 including the control unit 24 and the transmission antenna 11.

Note that, as described above, in a case where each of the power transmission control devices 10 is activated with time lags in the power transmission device 1a, the power reception apparatus 2 can identify the power transmission state from the power transmission device 1a corresponding to the power reception apparatus 2, and thus the control unit 24 can specify in which power reception apparatus 2 a foreign matter has been detected between the reception antenna 211 and the transmission antenna 11 even when the voltage level supplied to the power reception device 21 is within the normal range.

The control unit 24 also temporarily outputs the error information. It is assumed that the time when the error information is output is set in advance.

Also, in the second embodiment, in the power reception apparatus 2, when error information is temporarily output, the control unit 24 transmits information indicating that an error is occurring to the communication unit 105 of each of the power transmission control devices 10. Specifically, the control unit 24 cannot specify in which transmission antennas 11 a foreign matter has been detected; however, the control unit 24 transmits information indicating that an error is occurring due to detection of the foreign matter to the communication unit 105 of each of the power transmission control devices 10. Alternatively, the control unit 24 outputs, to the communication unit 105 of the power transmission control device 10 that supplies high-frequency power to the corresponding transmission antenna 11, information indicating that an error is occurring due to detection of a foreign matter between the reception antenna 211 of the power reception apparatus 2 including the control unit 24 and the transmission antenna 11. As described above, there may be two types of information, which indicates occurrence of an error, transmitted from the control unit 24 to the communication unit 105 of each of the power transmission control devices 10.

The power transmission control device 10 stops the supply of the high-frequency power if high-frequency power is supplied to a power transmission target antenna when the communication unit 105 receives information indicating that an error is occurring from the power reception apparatus 2.

Specifically, in a case where the power reception apparatus 2 transmits information indicating that an error is occurring due to detection of a foreign matter although it is not possible to specify in which transmission antenna 11 the foreign matter has been detected, the supply of high-frequency power is stopped in all the power transmission control devices 10. That is, in a case where non-contact power supply is performed from a transmission antenna 11 to the power reception device 21 and it is determined on the power reception apparatus 2 side that the voltage level of the power supplied to the power reception device 21 is within the normal range, in all the power transmission control devices 10, the supply of high-frequency power is stopped. However, in a case where a transmission antenna 11 has already been determined as the power transmission target antenna, the power transmission control device 10 does not stop the supply of the high-frequency power to the power transmission target antenna.

On the other hand, in a case where the power reception apparatus 2 transmits information indicating that an error is occurring due to detection of a foreign matter between the reception antenna 211 included in the power reception apparatus 2 and a transmission antenna 11, in the power transmission control device 10 that supplies high-frequency power to the transmission antenna 11 corresponding to the reception antenna 211 included in the power reception apparatus 2, the supply of the high-frequency power is stopped.

In step ST607, if the foreign matter detecting unit 103 detects no foreign matters (in the case of "NO" in step ST607) and no information indicating that an error is occurring is received from the power reception apparatus 2, the process proceeds to step ST608.

The antenna control unit 1041 determines whether or not the power transmission target antenna is performing non-contact power supply to the power reception device 21 (step ST608).

Note that, in the second embodiment, if the corresponding transmission antenna 11 is not a power transmission target antenna, step ST608 is skipped and the process returns to step ST601.

In step ST608, if the antenna control unit 1041 determines that the power transmission target antenna is performing non-contact power supply to the power reception device 21 (in the case of "YES" in step ST608), the process returns to step ST605 and the "steady power transmission process" is repeated.

Therefore, the power transmission unit 1042 continues to supply high-frequency power to the power transmission target antenna if the corresponding transmission antenna 11 is a power transmission target antenna, and keeps halting the supply of high-frequency power to the transmission antenna 11 if the corresponding transmission antenna 11 is not a power transmission target antenna (in the case of "NO" in step ST608).

Then, the steady power transmission process of step ST605 and subsequent steps are repeated.

On the other hand, if the antenna control unit 1041 determines in step ST608 that the power transmission target antenna is not performing non-contact power supply to the power reception device 21 (in the case of "NO" in step ST608), the antenna control unit 1041 outputs an error signal to the communication unit 105 (step ST610).

When the error signal is output from the antenna control unit 1041, the error notification unit 10522 of the communication unit 105 transmits the error signal to the power reception apparatus 2.

In the power reception apparatus 2, the error reception unit 2222 of the communication unit 22 receives the error signal and outputs the error signal to the control unit 24. The control unit 24 temporarily outputs the error information. The specific operation in which the control unit 24 temporarily outputs the error information is similar to the above-described case in which an error signal indicating detection of a foreign matter is output from the antenna control unit 1041 of the power transmission controlling unit 104, and thus duplicate description will be omitted.

The control unit 24 also transmits information indicating that an error is occurring to the communication unit 105 of each of the power transmission control devices 10 after temporarily outputting the error information. The specific operation in which the control unit 24 transmits information indicating that an error is occurring to the communication unit 105 is similar to the above-described case in which an error signal indicating detection of a foreign matter is output from the antenna control unit 1041 of the power transmission controlling unit 104, and thus duplicate description will be omitted.

The power transmission control device 10 stops the supply of the high-frequency power if high-frequency power is supplied to a power transmission target antenna when the communication unit 105 receives information indicating that an error is occurring from the power reception apparatus 2. In the power transmission control device 10, the specific operation of stopping the supply of high-frequency power is similar to the above-described case in which an error signal indicating detection of a foreign matter is output from the antenna control unit 1041 of the power transmission controlling unit 104, and thus duplicate description will be omitted.

In a case where the power reception apparatus 2 cannot identify the power reception apparatus 2 to which non-contact power supply to the power reception device 21 is not performed, the supply of high-frequency power is stopped in all the power transmission control devices 10. Alternatively, in a case where the power reception apparatus 2 can identify the power reception apparatus 2 to which non-contact power supply to the power reception device 21 is not performed, the supply of the high-frequency power is stopped only in the power transmission control device 10 that is supplying the high-frequency power to the transmission antenna 11 corresponding to the reception antenna 211 of the power reception device 21 to which non-contact power supply is not performed.

Here, it is assumed that the power transmission target antenna becomes unable to perform non-contact power supply to the power reception device 21 of the power reception apparatus 2 due to reasons such as that the power reception apparatus 2 has been moved. In this case, on the power reception apparatus 2 side, the voltage level of the power supplied to the power reception device 21 becomes lower than the normal range, and the control unit 24 can determine that non-contact power supply is no longer performed in the power reception apparatus 2 that includes the control unit 24. Therefore, the supply of the high-frequency power is stopped only in the power transmission control device 10 that is supplying the high-frequency power to the transmission antenna 11 corresponding to the reception antenna 211 of the power reception device 21 to which the non-contact power supply is not performed.

The operation of the power transmission control device 10 has been described above assuming that the power transmission control device 10 is activated for the first time after installation.

Hereinafter, the operation in a case where the power transmission control device 10 is activated for the second time or more after installation will be described.

Regarding the operation of the power reception apparatus 2, the specific operation is the same regardless of whether the power transmission control device 10 is activated for the first time after installation or for the second time or more after installation. However, if it is already set in the power transmission control device 10 to perform non-contact power supply to the power reception apparatus 2, the power reception apparatus 2 does not perform the operations of steps ST401 to ST404 described in FIG. 4 but is driven by power supplied from the power transmission device 1a (step ST405). To be already set in the power transmission control device 10 to perform non-contact power supply to the power reception apparatus 2 means that the transmission antenna 11 corresponding to the reception antenna 211 of the power reception apparatus 2 is determined as a power transmission target antenna in the power transmission control device 10.

In a case where the power transmission control device 10 is activated for the second time or more after installation, and the corresponding transmission antenna 11 is already a power transmission target antenna, the antenna control unit 1041 of the power transmission controlling unit 104 keeps the power transmission target antenna as the power transmission target antenna when an activation signal is output from the activation signal receiving unit 1051 to cause the power transmission unit 1042 to supply high-frequency power to the corresponding transmission antenna 11. Then, the power transmission control device 10 ends the "activation process" and skips steps ST603 to ST604 to proceed to step ST605.

If the corresponding transmission antenna 11 is not a power transmission target antenna, the antenna control unit 1041 causes the power transmission unit 1042 to supply high-frequency power to the transmission antenna 11 (steps ST601 to ST602).

As described above, in the non-contact power supply system 1000 according to the second embodiment, the power transmission device 1a includes the power transmission control devices 10 each corresponding to one of the multiple transmission antennas 11.

As compared with the power transmission device 1 of the non-contact power supply system 1000 according to the first embodiment, the configuration of the power transmission device 1a becomes complicated and requires more components since it is necessary to include multiple power transmission control devices 10. However, in the non-contact power supply system 1000 that presumes high-frequency power transmission, it is possible to set the operation characteristics of a power transmission control device 10 in correspondence to the input impedance of each of the transmission antennas 11, and thus high-frequency properties such as a reduced power loss can be obtained.

As described above, according to the second embodiment, the non-contact power supply system 1000 includes the power transmission control devices 10 each corresponding to one of the multiple transmission antennas 11. In the non-contact power supply system 1000 that presumes high-frequency power transmission, it is possible to set the operation characteristics of a power transmission control device 10 in correspondence to the input impedance of each of the transmission antennas 11, and thus high-frequency properties such as a reduced power loss can be obtained.

In the first and second embodiments described above, the non-contact power supply system 1000 employs a resonance-type non-contact power supply scheme; however, without limiting thereto, for example an electromagnetic induction type may be employed.

Note that, for example in a case where an electromagnetic induction type is employed in a non-contact power supply system, no power is supplied from the power transmission device unless a power reception apparatus is disposed to face the power transmission device. Therefore, in such cases where the power transmission device is installed under the floor or the like, it is necessary to provide an indication or the like to show the installation position of the power transmission device on the floor surface so that the position of the power transmission device becomes clear.

On the other hand, in the resonance-type non-contact power supply scheme, as described above, the relative position between the power transmission device and the power reception apparatus is output in a case where the power transmission device is not in a position facing the power reception apparatus, and a user can search the installation position of the power reception apparatus in order to install the power reception apparatus at a position where the power supply efficiency will be improved. For this reason, it is not necessary to provide an indication or the like to show the installation position of the power transmission device on the floor surface, thereby preventing the design of the floor from being affected.

In the first and second embodiments described above, it is assumed that the activation signal transmitted by the activation signal transmitting unit 221 of the power reception apparatus 2 to the power transmission control device 10 and the response signal transmitted by the response transmission unit 2221 of the power reception apparatus 2 to the power transmission control device 10 do not include information that can specify which power reception apparatus 2 has transmitted the signal.

However, for example, the activation signal transmitting unit 221 of the power reception apparatus 2 may be configured to transmit an activation signal by adding information related to the power reception apparatus 2 to help narrowing down necessary transmission antennas 11. Specifically, for example, the activation signal transmitting unit 221 adds, to the activation signal, information of the minimum power required to drive the power reception apparatus 2, such as 100 watts or 500 watts, and transmits the activation signal to the power transmission control device 10 (see step ST402 in FIG. 4). Here, as an example, it is assumed that the activation signal transmitting unit 221 transmits the activation signal by adding information of 100 watts.

When the activation signal receiving unit 1051 receives the activation signal in the power transmission control device 10, the antenna control unit 1041 causes the power transmission unit 1042 to start supplying high-frequency power to the transmission antenna 11. Then, when the power transmission unit 1042 starts supplying high-frequency power, the antenna determination unit 1043 determines a transmission antenna 11 whose high-frequency power supplied from the power transmission unit 1042 is equal to or greater than 100 watts as a power transmission target antenna. The antenna control unit 1041 performs control to stop supplying high-frequency power to transmission antennas 11 other than the power transmission target antenna.

With this configuration, it is possible to reduce unnecessary emission of electromagnetic waves caused by activation of unnecessary transmission antennas 11 in the "activation process" of the power transmission control device 10.

In addition, for example, the response transmission unit 2221 of the power reception apparatus 2 may transmit a response signal by adding information, to the response signal, for specifying the power reception apparatus 2, such as a standard code preset for the power reception apparatus 2 (see step ST404 in FIG. 4).

In this case, the power transmission control device 10 can identify the power reception apparatus 2 that has transmitted the response signal on the basis of the standard code.

If the power transmission control device 10 can identify the power reception apparatus 2, it is also possible to determine the power that is typically consumed by the power reception apparatus 2.

Then, in the power transmission control device 10, the antenna determination unit 1043 can determine which transmission antenna 11 is to be a power transmission target antenna corresponding to which power reception apparatus 2 on the basis of the supply state of high-frequency power to the transmission antennas 11 and the power that is typically consumed (see step ST605 in FIG. 6).

In the first and second embodiments, when the user turns on the switch 3 of the power reception apparatus 2, the power reception apparatus 2 transmits an activation signal to the power transmission control device 10 and the power transmission control device 10 starts processing such as activation of the transmission antennas 11 described above in conjunction with the operation of the switch 3. However, this is merely an example, and for example, the power reception apparatus 2 may transmit an activation signal to the power transmission control device 10 in conjunction with the operation of the switch 3 when the user turns off the switch 3 of the power reception apparatus 2 in the first and second embodiments. Furthermore, for example in the first and second embodiments, the power reception apparatus 2 may transmit an activation signal to the power transmission control device 10 in conjunction with the operation of the switch 3 in both cases where the user turns on and off the switch 3 of the power reception apparatus 2.

In the first and second embodiments, when operation, by a user, of the switch 3 of the power reception apparatus 2 is received, the power reception apparatus 2 transmits an activation signal to the power transmission control device 10 in conjunction with the operation of the switch 3. However, this is merely an example, and the power reception apparatus 2 only needs to transmit an activation signal to the power transmission control device 10 when an operation instruction is received. An operation instruction refers to any operation instruction from a user to the power reception apparatus 2.

In the first and second embodiments described above, the power transmission control device 10 includes the power reception unit 101, the high-frequency inverter circuit 102, the foreign matter detecting unit 103, the communication unit 105, and the power transmission controlling unit 104; however, these components are not essential. The power transmission control device 10 is only required to include at least the activation signal receiving unit 1051, the power transmission unit 1042, and the antenna determination unit 1043.

Moreover, in the second embodiment described above, the power transmission device 1a includes the power transmission control devices 10 as illustrated in FIG. 2B corresponding to each of the multiple transmission antennas 11; however, this is merely an example. In the second embodiment, it is only required that the power transmission device 1a includes, corresponding to each of the multiple transmission antennas 11, at least the high-frequency inverter circuit 102, the activation signal receiving unit 1051, the power transmission unit 1042, the response reception unit 10521, the antenna determination unit 1043, and the antenna control unit 1041.

Note that the present invention may include a flexible combination of the embodiments, a modification of any component of the embodiments, or an omission of any component in the embodiments within the scope of the present invention.

### INDUSTRIAL APPLICABILITY

A non-contact power supply system according to the present invention can reduce unnecessary radiation of electromagnetic waves to an area where no power reception apparatus to be supplied with power from a power transmission device is installed, and thus is applicable to, for example, a non-contact power supply system in a structure where multiple power reception apparatuses can be installed.

### REFERENCE SIGNS LIST

**1** and **1a**: power transmission device,
**2**: power reception apparatus,
**3**: switch,
**10**: power transmission control device,
**11**: transmission antenna,
**101**: power reception unit,
**102**: high-frequency inverter circuit,
**103**: foreign matter detecting unit,
**104**: power transmission controlling unit,
**1041**: antenna control unit,
**1042**: power transmission unit,
**1043**: antenna determination unit,
**105**: communication unit,
**1051**: activation signal receiving unit,
**1052**: response transmission and reception unit,
**10521**: response reception unit,
**10522**: error notification unit,
**21**: power reception device,
**211**: reception antenna,
**22**: communication unit,
**221**: activation signal transmitting unit,
**222**: response transmission and reception unit,
**2221**: response transmission unit,
**2222**: error reception unit,
**23**: output unit,
**24**: control unit,
**25**: power supply unit,
**701** and **801**: processing circuitry,
**702** and **802**: HDD,
**703** and **803**: input interface device,
**704** and **804**: output interface device,
**707**: output device,
**1000**: non-contact power supply system

## Claims

1. A non-contact power supply system, comprising:
a power reception apparatus, including:
a reception antenna capable of receiving power from any of multiple transmission antennas included in a power transmission device in a non-contact manner;
a power supply unit; and
an activation signal transmitting unit for transmitting an activation signal for activating the multiple transmission antennas to the power transmission device when supplied with power from the power supply unit and receiving an operation instruction; and
the power transmission device, including:
an activation signal receiving unit for receiving the activation signal transmitted from the activation signal transmitting unit;
a power transmission unit for starting power supply to the multiple transmission antennas when the activation signal receiving unit receives the activation signal; and
an antenna determination unit for determining a power transmission target antenna to which the power supply from the power transmission unit is to be continued among the multiple transmission antennas,
wherein non-contact power supply to the reception antenna of the power reception apparatus is performed with the power transmission unit supplying power to the power transmission target antenna determined by the antenna determination unit.

2. The non-contact power supply system according to claim 1,
wherein the power reception apparatus includes
a response transmission unit for transmitting a response signal to the power transmission device when the reception antenna receives power in response to the power transmission device starting power supply to the multiple transmission antennas,
the power transmission device includes
a response reception unit for receiving the response signal transmitted from the response transmission unit, and
the antenna determination unit determines the power transmission target antenna depending on the response signal when the response reception unit receives the response signal.

3. The non-contact power supply system according to claim 1, wherein
the power transmission device further includes
an antenna control unit for causing the power transmission unit to continue the power supply to the power transmission target antenna determined by the antenna determination unit and to stop the power supply to transmission antennas other than the power transmission target antenna.

4. The non-contact power supply system according to claim 1, wherein
the activation signal transmitted by the activation signal receiving unit includes information related to the power reception apparatus, and
the antenna determination unit determines the power transmission target antenna on a basis of information for specifying the power reception apparatus and a state of power supply to the multiple transmission antennas performed by the power transmission unit when the power transmission unit starts power supply to the multiple transmission antennas.

5. The non-contact power supply system according to claim 2, wherein
the response signal transmitted by the response transmission unit includes information for identifying the power reception apparatus, and
the antenna determination unit determines the power transmission target antenna on a basis of information for specifying the power reception apparatus when the response reception unit receives the response signal transmitted from the response transmission unit.

6. The non-contact power supply system according to claim 1, wherein
the antenna determination unit determines the power transmission target antenna on a basis of a state of the power supply to the transmission antennas by the power transmission unit.

7. The non-contact power supply system according to claim 3, wherein
the power transmission device further includes
a foreign matter detecting unit for detecting a foreign matter present between the transmission antennas and the reception antenna on a basis of a state of the power supply to the power transmission target antenna while the power transmission unit is performing the power supply to the power transmission target antenna, and
the antenna control unit causes the power transmission unit to stop the power supply to the power transmission target antenna when the foreign matter detecting unit detects the foreign matter.

8. The non-contact power supply system according to claim 3, wherein
the antenna control unit causes the power transmission unit to perform the power supply to the power transmission target antenna, and then maintains a state in which the power supply to the power transmission target antenna is continued until the activation signal is output again from the activation signal transmitting unit while maintaining a state in which the power supply to transmission antennas other than the power transmission target antenna is stopped.

9. The non-contact power supply system according to claim 1, wherein
the transmission antennas are for performing non-contact power supply to the power reception apparatus by a resonance-type non-contact power supply scheme.

10. The non-contact power supply system according to claim 1, wherein
the power transmission device further includes the activation signal receiving unit, the power transmission unit, and the antenna determination unit corresponding to each of the multiple transmission antennas.

11. A power reception apparatus for non-contact power supply, the power reception apparatus comprising:
a reception antenna capable of receiving power from any of multiple transmission antennas included in a power transmission device in a non-contact manner;
a power supply unit; and
an activation signal transmitting unit for transmitting an activation signal for activating the multiple transmission antennas to the power transmission device when supplied with power from the power supply unit and receiving an operation instruction.

12. The power reception apparatus for non-contact power supply according to claim 11, further comprising:
a response transmission unit for transmitting a response signal to the power transmission device when the reception antenna receives power in response to the power transmission device starting to power supply to the multiple transmission antennas.

13. The power reception apparatus for non-contact power supply according to claim 11, wherein
the activation signal transmitting unit outputs the activation signal when a power source switch is turned on or off.

14. An activation signal transmission method by a power reception apparatus for non-contact power supply, the method comprising:
by an activation signal transmitting unit,
receiving an operation instruction; and
transmitting an activation signal for activating multiple transmission antennas included in a transmission device to the transmission device when the operation instruction is received.
